# EUROPEAN PATENT APPLICATION

(11) **EP 4 800 584 A1**
(43) Date of publication of application: **02.09.2026**
(21) Application number: 26157254.9
(22) Date of filing: 09.02.2026
(51) Int. Cl.: G06F 21/44, B60R 25/24

(54) **MANAGEMENT SYSTEM, VEHICLE MANAGER, DELETION MANAGEMENT METHOD, AND PROGRAM**

(30) Priority: 28.02.2025 JP 2025031970
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A management system, a vehicle manager, a deletion management method, and a program are provided. Under a condition in which a predetermined specified condition (RC) is satisfied, processing circuitry deletes (S69) a deletion subject digital key (DK2) included in multiple digital keys to a vehicle (20). When deleting (S69) the deletion subject digital key (DK2), a group key deletion process (S70) is executed to delete one or more digital keys (DK3, DK4) registered based on the deletion subject digital key (DK2). If the vehicle (20) authenticates (S81: YES) at least one of the one or more registered digital keys (DK3, DK4), the group key deletion process (S70) is not executed

## Description

### CROSS-REFERENCE TO RELATED APPLICATIONS

This application is based upon and claims the benefit of priority from Japanese Patent Application No. 2025-031970, filed on February 28th, 2025, the entire contents of which are incorporated herein by reference.

### BACKGROUND

### 1. Field

The following description relates to a management system, a vehicle manager, a deletion management method, and a program.

### 2. Description of Related Art

JP2024-001720A describes a digital key management system configured to manage multiple digital keys. The digital keys include a reference digital key and a digital key registered based on the reference digital key.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a management system including processing circuitry is provided. The processing circuitry is configured to delete a deletion subject digital key under a condition in which a predetermined specified condition is satisfied. The deletion subject digital key is one of digital keys to a vehicle. When deleting the deletion subject digital key, the processing circuitry is configured to execute a group key deletion process that deletes one or more registered digital keys. The one or more registered digital keys are another one or more of the digital keys and registered based on the deletion subject digital key. The group key deletion process is not executed if the vehicle authenticates at least one of the one or more registered digital keys. The group key deletion process is executed if the vehicle does not authenticate any of the one or more registered digital keys.

In another general aspect, a vehicle manager including vehicle processing circuitry installed in a vehicle is provided. The vehicle processing circuitry is configured to delete a deletion subject digital key under a condition in which a predetermined specified condition is satisfied. The deletion subject digital key is one of digital keys enabled for the vehicle. When deleting the deletion subject digital key, the vehicle processing circuitry is configured to execute a group key deletion process that deletes one or more registered digital keys. The one or more registered digital keys are another one or more of the digital keys and registered based on the deletion subject digital key. The group key deletion process is not executed if the vehicle authenticates at least one of the one or more registered digital keys. The group key deletion process is executed if the vehicle does not authenticate any of the one or more registered digital keys.

In another general aspect, a deletion management method performed by a management system including a computer is provided. The method includes deleting a deletion subject digital key under a condition in which a predetermined specified condition is satisfied. The deletion subject digital key is one of digital keys to a vehicle. When the deleting the deletion subject digital key is performed, the method further includes executing a group key deletion process that deletes one or more registered digital keys. The one or more registered digital keys are another one or more of the digital keys and registered based on the deletion subject digital key. The group key deletion process is not executed if the vehicle authenticates at least one of the one or more registered digital keys. The group key deletion process is executed if the vehicle does not authenticate any of the one or more registered digital keys.

In another general aspect, a program implemented by a non-transitory computer readable storage medium storing a program code that causes processing circuitry to execute a deletion management process is provided. The deletion management process includes the deletion management method.

With the above-described configurations, when deleting the deletion subject digital key, the digital keys registered based on the deletion subject digital key are not deleted if the vehicle authenticates at least one of the digital keys registered based on the deletion subject digital key. The above-described management system, vehicle manager, deletion management method, and a program avoid a situation in which the users of the digital keys registered based on the deletion subject digital key become unable to use the vehicle.

Depending on the configuration of the management system, the digital keys registered based on the deletion subject digital key may be deleted along with the deletion subject digital key when the specified condition is satisfied.

If the digital keys registered based on the deletion subject digital key are deleted along with the deletion subject digital key, the users of the digital keys registered based on the deletion subject digital key may become unable to use the vehicle. The configurations described above reduce such a risk.

Other features and aspects will be apparent from the following detailed description, the drawings, and the claims.

### BRIEF DESCRIPTION OF THE DRAWINGS

Fig. 1 is a schematic diagram of a management system in accordance with a first embodiment.
Fig. 2 is a schematic diagram of owner key information in accordance with the first embodiment.
Fig. 3 is a schematic diagram of shareable key information in accordance with the first embodiment.
Fig. 4 is a schematic diagram of data stored in a database in accordance with the first embodiment.
Fig. 5 is a diagram illustrating a series of processes executed by the management system to register an owner key in accordance with the first embodiment.
Fig. 6 is a diagram illustrating a series of processes executed by the management system to register a friend key in accordance with the first embodiment.
Fig. 7 is a diagram illustrating a series of processes executed by the management system to register a guest key in accordance with the first embodiment.
Fig. 8 is a diagram illustrating a series of processes executed by the management system to perform deletion management in accordance with the first embodiment.
Fig. 9 is a flowchart illustrating details of a process executed by a vehicle manager to perform an acceptance determination of a deletion request in accordance with the first embodiment.
Fig. 10 is a flowchart illustrating a series of processes executed by a vehicle manager to perform a transmission permission determination of a satisfaction notification in accordance with a second embodiment.
Fig. 11 is a flowchart illustrating a series of processes executed by a management server to determine whether to transmit a forced acceptance request in accordance with a third embodiment.
Fig. 12 is a flowchart illustrating a series of processes executed by a management server to exclude a subject of a group key deletion process in accordance with a fourth embodiment.
Fig. 13 is a flowchart illustrating a series of processes executed by a management server to permit generation of a deletion request in accordance with a fifth embodiment.
Fig. 14 is a diagram illustrating a series of processes executed by a management system to perform deletion management in accordance with a sixth embodiment.
Fig. 15 is a flowchart illustrating a series of processes executed by a vehicle manager to permit deletion of authentication information in accordance with the sixth embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

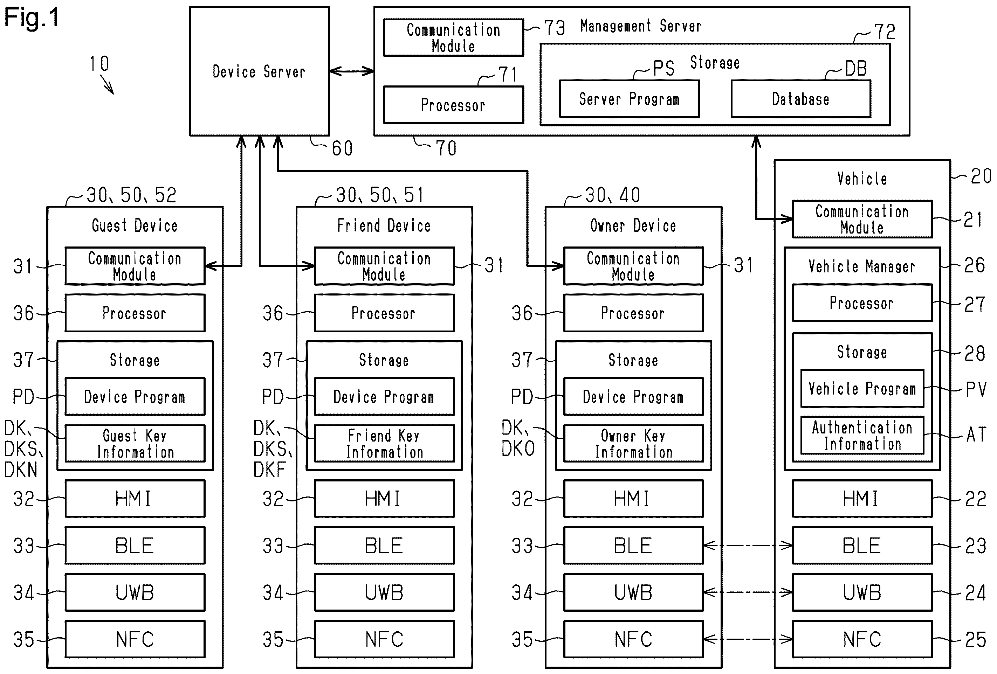

Figs. 1 to 9 illustrate a management system 10 in accordance with a first embodiment. The first embodiment of the present disclosure includes a management system, a vehicle manager, a deletion management method, a deletion management process, a program product, a program, and a storage medium.

### Overview of Management System

As shown in Fig. 1, a management system 10 is configured to manage multiple digital keys enabled for a vehicle 20. The Car Connectivity Consortium (CCC) has established the standards for digital keys. The digital key-related aspects of the present embodiment are compliant with the CCC standards, and are also applicable to other standards or systems that do not use the CCC standards. The management system 10 includes the vehicle 20, multiple devices 30, a device server 60, and a management server 70.

The vehicle 20 includes a vehicle communication module 21, a vehicle human-machine interface (HMI) 22, a vehicle Bluetooth Low Energy (BLE) module 23, a vehicle ultra-wide band (UWB) module 24, a vehicle near-field communication (NFC) module 25, and a vehicle manager 26.

The vehicle communication module 21 is configured to communicate with the management server 70 through a wireless communication line. The vehicle HMI 22 includes an input device and a presentation device. When the input device receives an operation performed by a user of the vehicle 20, the input device inputs a signal indicating the operation to the vehicle 20. The presentation device is configured to present information to the user by images, sounds, or the like. The presentation device includes, for example, a monitor and a speaker.

The vehicle BLE module 23 is configured to perform short-range communication with the device 30 through BLE communication. The vehicle UWB module 24 is configured to communicate with the device 30 using UWB. The vehicle UWB module 24 is configured to measure a distance from the device 30 to the vehicle 20. The vehicle NFC module 25 is configured to perform short-range communication with the device 30 in accordance with NFC.

The vehicle manager 26 is installed in the vehicle 20. The vehicle manager 26 is configured to perform management related to the multiple digital keys to the vehicle 20. The vehicle manager 26 is, for example, a digital key electronic control unit (ECU). The vehicle manager 26 includes a vehicle processor 27 and vehicle storage 28. The vehicle storage 28 is vehicle memory that stores a vehicle program PV and key authentication information AT. When the vehicle processor 27 runs the vehicle program PV, the vehicle program PV causes the vehicle processor 27 to store and/or delete the key authentication information AT. The key authentication information AT includes information used for authentication of a digital key so as to allow the digital key to control the vehicle 20. The key authentication information AT is provided for each digital key for authentication. The vehicle processor 27 is a central processing unit (CPU); namely, vehicle processing circuitry. The vehicle processor 27 executes processing related to storage and deletion of the key authentication information AT by running the vehicle program PV.

When the vehicle manager 26 authenticates a digital key, the vehicle manager 26 enables the authenticated digital key to control the vehicle 20. In an example, when the vehicle manager 26 authenticates a digital key, the vehicle manager 26 enables the authenticated digital key to unlock the vehicle 20. In another example, when the vehicle manager 26 authenticates a digital key, the vehicle manager 26 enables the authenticated digital key to start the vehicle 20.

The device 30 may be a portable information terminal, such as a smartphone. The device 30 includes a device communication module 31, a device HMI 32, a device BLE module 33, a device UWB module 34, a device NFC module 35, a device processor 36, and device storage 37.

The device communication module 31 is configured to communicate with the device server 60 through a wireless communication line. The device HMI 32 includes an input device and a presentation device. When the input device receives an operation performed by a user of the device 30, the input device inputs a signal indicating the operation to the device 30. The presentation device is configured to present information to the user by images, sounds, or the like. The presentation device includes, for example, a monitor and a speaker.

The device BLE module 33 is configured to perform short-range communication with the vehicle 20 through BLE communication. The device UWB module 34 is configured to communicate with the vehicle 20 using UWB. The device NFC module 35 is configured to perform short-range communication with the vehicle 20 in accordance with NFC.

The device storage 37 stores a device program PD and key information DK. When the device processor 36 runs the device program PD, the device program DP causes the device processor 36 to store and/or delete the key information DK. The key information DK includes information that indicates a digital key. The device processor 36 is a CPU; namely, processing circuitry.

The device program PD includes, for example, a device application and a digital key framework. The device application includes an application used for storage and deletion of the key information DK. The digital key framework includes a program that provides the device 30 with a pairing functionality and a digital key sharing functionality through an application program interface (API) prepared in an operating system (OS). The device processor 36 executes processing related to storage and deletion of the key information DK by running the device program PD.

The devices 30 include an owner device 40 and multiple shareable devices 50. The owner device 40 stores owner key information DKO as the key information DK. The owner key information DKO indicates an owner key KO. Only a single owner key KO is allowed to be registered to a single vehicle 20. Accordingly, there is only one owner key KO for each vehicle 20.

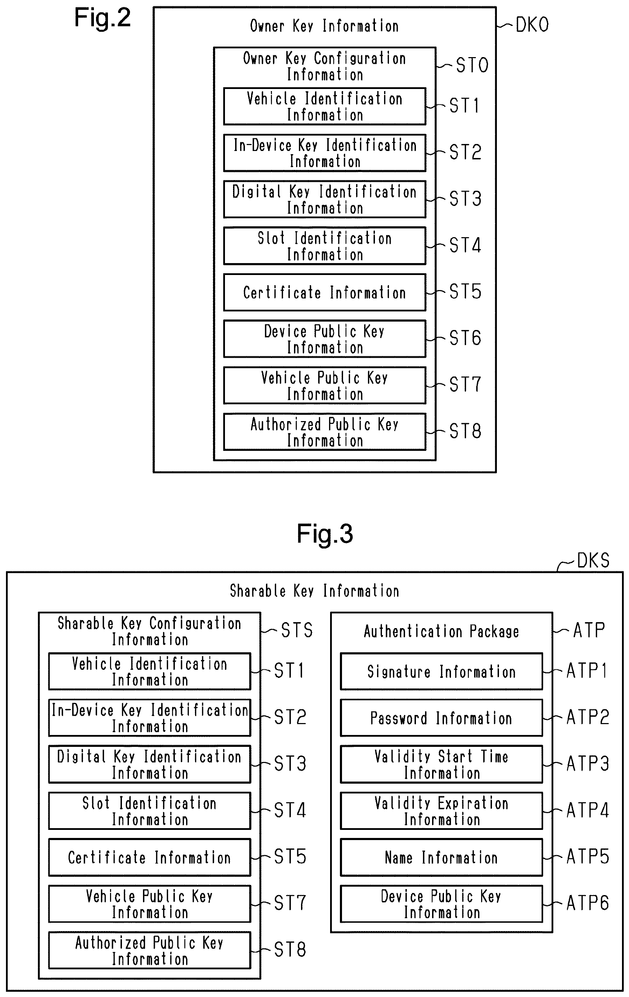

As shown in Fig. 2, the owner key information DKO includes owner key configuration information STO. The owner key configuration information STO includes vehicle identification information ST1, in-device key identification information ST2, digital key identification information ST3, and slot identification information ST4. The owner key configuration information STO further includes certificate information ST5, device public key information ST6, vehicle public key information ST7, and authorized public key information ST8.

The vehicle identification information ST1 includes information that identifies the vehicle 20, for which the digital key is set. The vehicle identification information ST1 includes, for example, identification information (ID) of the vehicle 20.

The in-device key identification information ST2 is used to manage the digital key inside the device 30. The in-device key identification information ST2 includes information that allows for identification of the digital key inside an application of the device 30.

The digital key identification information ST3 is used to manage the digital key inside the management server 70. The slot identification information ST4 includes information that allows the digital key to be identified locally inside the device 30.

The certificate information ST5 indicates a certificate of the digital key. The device public key information ST6 indicates a device public key PKD, which is a public key of the device 30. The device public key PKD in the owner key information DKO indicates a public key of the owner device 40. The vehicle public key information ST7 indicates a vehicle public key PKV, which is a public key of the vehicle 20. The authorized public key information ST8 indicates a vehicle public key PKV that has already been authorized.

As shown in Fig. 1, the shareable device 50 stores shareable key information DKS as the key information DK. The sharable key information KS indicates a shareable key KS. Multiple shareable keys KS are allowed to be registered to a single vehicle 20 as available digital keys. Accordingly, there may be multiple shareable keys KS for each vehicle 20.

The shareable devices 50 include a friend device 51 and a guest device 52. The friend device 51 stores friend key information DKF as the shareable key information DKS. The friend key information DKF indicates a friend key KF. The guest device 52 stores guest key information DKN as the shareable key information DKS. The guest key information DKN indicates a guest key KN. The friend key KF and the guest key KN are different types of shareable key KS. As will be described later, the friend key KF is a shareable key KS registered in response to a direct registration request D21 from the owner device 40. As will be described later, the guest key KN is a shareable key KS registered in response to a registration request D31 from the friend device 51. That is, the guest key KN is a shareable key KS registered in response to a registration request from a shareable device 50 that is not the owner device 40.

A state in which a digital key is registered to the device 30 includes a state in which the digital key is enabled. Specifically, in a state in which a digital key is registered to the device 30, the vehicle 20 stores the key authentication information AT and the device 30 stores the key information DK.

As shown in Fig. 3, the shareable key information DKS includes shareable key configuration information STS and an authentication package ATP. The shareable key configuration information STS includes the vehicle identification information ST1, the in-device key identification information ST2, the digital key identification information ST3, and the slot identification information ST4. The shareable key configuration information STS further includes the certificate information ST5, the vehicle public key information ST7, and the authorized public key information ST8. Accordingly, the shareable key configuration information STS is equivalent to the owner key configuration information STO without the device public key information ST6.

The authentication package ATP includes signature information ATP1, password information ATP2, validity start time information ATP3, validity expiration information ATP4, name information ATP5, and device public key information ATP6.

The signature information ATP1 indicates that the shareable device 50 is an authorized entity for sharing a digital key. In a case of the friend device 51, for example, the signature information ATP1 indicates a signature of the owner device 40. The owner signature information indicates that the owner device 40 has signed the device public key PKD of the friend device 51, which is indicated by the device public key information ATP6. In a case of the guest device 52, for example, the signature information ATP1 indicates a signature of the friend device 51. The friend signature information indicates that the friend device 51 has signed the device public key PKD of the guest device 52, which is indicated by the device public key information ATP6.

The password information ATP2 indicates a pairing password PAS used to establish a secure channel between the vehicle 20 and the owner device 40 during a pairing process. The validity start time information ATP3 indicates the earliest date and time at which the shareable key KS becomes valid for use. The validity expiration information ATP4 indicates the latest date and time until which the shareable key KS remains valid for use. The name information ATP5 indicates a name that identifies the shareable key KS. The name information ATP5 includes, for example, an identifiable name set for each shareable device 50 by the owner device 40.

As shown in Fig. 1, the device server 60 is configured to relay communication between the device 30 and the management server 70. The device server 60 is provided for each type of device 30. Specifically, the device server 60 used for communication with a first type of device 30 differs from the device server 60 used for communication with a second type of device 30. In an example in which the type of device 30 includes the model of device 30, the device server 60 is provided for each model of device 30. In another example in which the type of device 30 includes the communication line the device 30 uses, the device server 60 may be provided for each communication line used by the device 30.

Each of the device servers 60 relays communication to the management server 70, so that different types of devices 30 can communicate with the management server 70 via the device servers 60. Fig. 1 shows only one device server 60.

### Management Server

The management server 70 is configured to manage multiple digital keys. The management server 70 is configured to communicate with the vehicle 20 and multiple devices 30. The management server 70 includes a server processor 71, server storage 72, and a server communication module 73. The server processor 71 is a CPU; namely, server processing circuitry. The server communication module 73 is configured to communicate with the device server 60 through a wireless communication line. Further, the server communication module 73 is configured to perform wireless communication with the vehicle communication module 21 of the vehicle 20.

The server storage 72 stores a server program PS and a database DB. When the server processor 71 runs the server program PS, the server program PS causes the server processor 71 to register a digital key to the database DB and/or delete a digital key from the database DB.

In the database DB, each of the digital keys is associated with a corresponding vehicle 20 and a corresponding device 30 to which the digital key is registered. The database DB is divided into data blocks DA for each vehicle 20. In a state in which a digital key is registered, the device 30 that stores the key information DK indicating that digital key is stored in a corresponding data block DA in the management server 70.

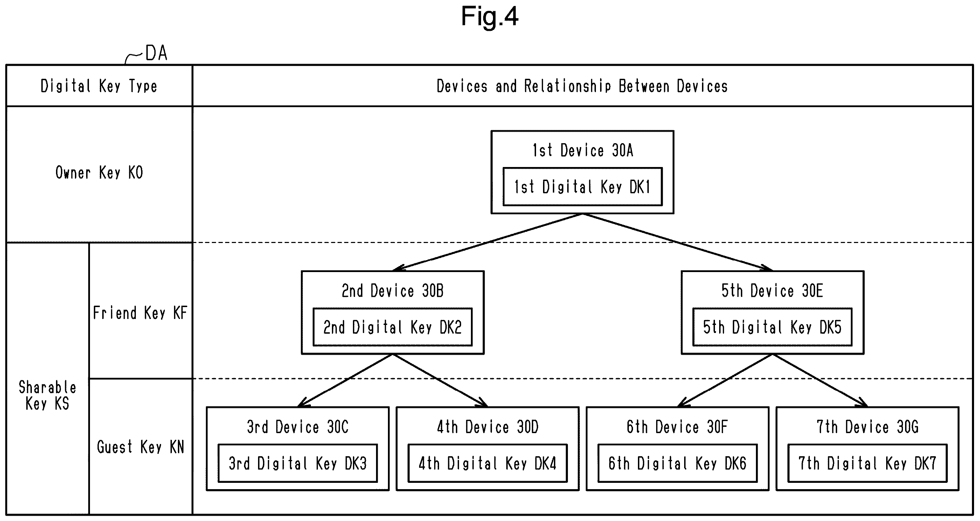

As shown in Fig. 4, the data block DA related to a single vehicle 20 stores types of the digital keys registered to the vehicle 20, the registered devices 30, and the relationship between the registered devices 30. The type of digital key determines a priority level of that digital key. From highest to lowest in the hierarchy of priority, the owner key KO, the friend key KF, and the guest key KN are ranked in this order. A relatively high degree of authority is granted to a digital key having a relatively high priority level.

The authority granted to a digital key relates to, for example, the number of shareable keys KS that can be requested for registration based on the digital key, the scope of control over the vehicle 20 that can be enabled through authentication of the digital key, or the like. Since a relatively high degree of authority is granted to a digital key having a relatively high priority level, for example, a greater number of shareable keys KS may be requested for registration by the device 30 corresponding to the digital key having a relatively high priority level. More specifically, for example, the number of friend keys KF that can be requested for registration by the owner device 40 is greater than the number of guest keys KN that can be requested for registration by the friend device 51.

Furthermore, since a relatively high degree of authority is granted to a digital key having a relatively high priority level, a broader scope of control over the vehicle 20 may be permitted to the digital key having the relatively high priority level, for example. The scope of control over the vehicle 20 includes, for example, a set of controllable functions, such as (a) starting the engine of the vehicle 20, (b) turning on the power of the vehicle 20, and (c) unlocking and locking the doors of the vehicle 20. In a case in which the scope of control over the vehicle 20 includes, for example, all of the above three functions (a) to (c), the scope is broader than a case in which the scope of control over the vehicle 20 includes only function (c): unlocking and locking the doors of the vehicle 20. More specifically, the friend key KF has a scope of control over the vehicle 20 that includes all three functions (a) to (c) described above, and the guest key KN has a scope of control over the vehicle 20 that is limited to only function (c): unlocking and locking the doors of the vehicle 20.

Fig. 4 illustrates a state in which a digital key is registered to each of seven devices 30 with respect to the single vehicle 20. The seven devices 30 will be referred to as first to seventh devices 30A to 30G. Further, the digital keys respectively registered to the first to seventh devices 30A to 30G will be referred to as first to seventh digital keys DK1 to DK7.

The data block DA indicates that the owner key KO is registered to the first device 30A. In other words, the first device 30A is the owner device 40. That is, the first digital key DK1 is the owner key KO.

The data block DA indicates that the shareable keys KS are respectively registered to the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. That is, the second to seventh digital keys DK2 to DK7 are all shareable keys KS.

More specifically, the data block DA indicates that the friend keys KF are respectively registered to the second device 30B and the fifth device 30E. In other words, the second device 30B and the fifth device 30E are the friend devices 51. The data block DA indicates that the guest keys KN are respectively registered to the third device 30C, the fourth device 30D, the sixth device 30F, and the seventh device 30G. In other words, the third device 30C, the fourth device 30D, the sixth device 30F, and the seventh device 30G are the guest devices 52.

The data block DA indicates that the second device 30B and the first device 30A have a relationship in which the friend key KF is registered to the second device 30B in response to a registration request from the first device 30A. That is, the second digital key DK2 is registered based on the first digital key DK1.

The data block DA indicates that the fifth device 30E and the first device 30A have a relationship in which the friend key KF is registered to the fifth device 30E in response to a registration request from the first device 30A. That is, the fifth digital key DK5 is registered based on the first digital key DK1.

The data block DA indicates that the third device 30C and the second device 30B have a relationship in which the guest key KN is registered to the third device 30C in response to a registration request from the second device 30B. That is, the third digital key DK3 is registered based on the second digital key DK2.

The data block DA indicates that the fourth device 30D and the second device 30B have a relationship in which the guest key KN is registered to the fourth device 30D in response to a registration request from the second device 30B. That is, the fourth digital key DK4 is registered based on the second digital key DK2.

The data block DA indicates that the sixth device 30F and the fifth device 30E have a relationship in which the guest key KN is registered to the sixth device 30F in response to a registration request from the fifth device 30E. That is, the sixth digital key DK6 is registered based on the fifth digital key DK5.

The data block DA indicates that the seventh device 30G and the fifth device 30E have a relationship in which the guest key KN is registered to the seventh device 30G in response to a registration request from the fifth device 30E. That is, the seventh digital key DK7 is registered based on the fifth digital key DK5.

As described above, the data block DA stores the devices 30 that are registered as digital keys. Further, the data block DA stores information indicating which device 30 issued a registration request that initiated registration of the devices 30. Such information is associated with each device 30 upon registration. Furthermore, the data block DA stores information indicating which digital key the digital keys are registered based on.

The device 30 is configured to generate a deletion reservation request D41, which will be described later, for a digital key of which registration the device 30 was involved in. The deletion reservation request D41 requests deletion of the digital key when a deletion condition RC as a specified condition is satisfied. The deletion reservation request D41 may be referred to as a reserved deletion request. The deletion reservation may be referred to as a reserved deletion.

In an example, the first device 30A is capable of generating a deletion reservation request D41 for the second to seventh digital keys DK2 to DK7. On the other hand, the first device 30A is incapable of generating a deletion reservation request D41 for the first digital key DK1.

The second device 30B is capable of generating a deletion reservation request D41 for the third digital key DK3 and the fourth digital key DK4. On the other hand, the second device 30B is incapable of generating a deletion reservation request D41 for the first digital key DK1, the second digital key DK2, or the fifth to seventh digital keys DK5 to DK7.

### Registration of Digital Key

A series of processes executed by the management system 10 to register a digital key will now be described. The management system 10 may register the owner key KO, the friend key KF, or the guest key KN. The description hereafter will illustrate an overall process that shifts a state in which no digital key is registered to a state in which at least one digital key is registered. Hereafter, the processing executed by the vehicle processor 27 will be described as the processing executed by the vehicle 20. The processing executed by the device processor 36 will be described as the processing executed by the device 30. The processing executed by the server processor 71 will be described as the processing executed by the management server 70.

### Registration of Owner Key

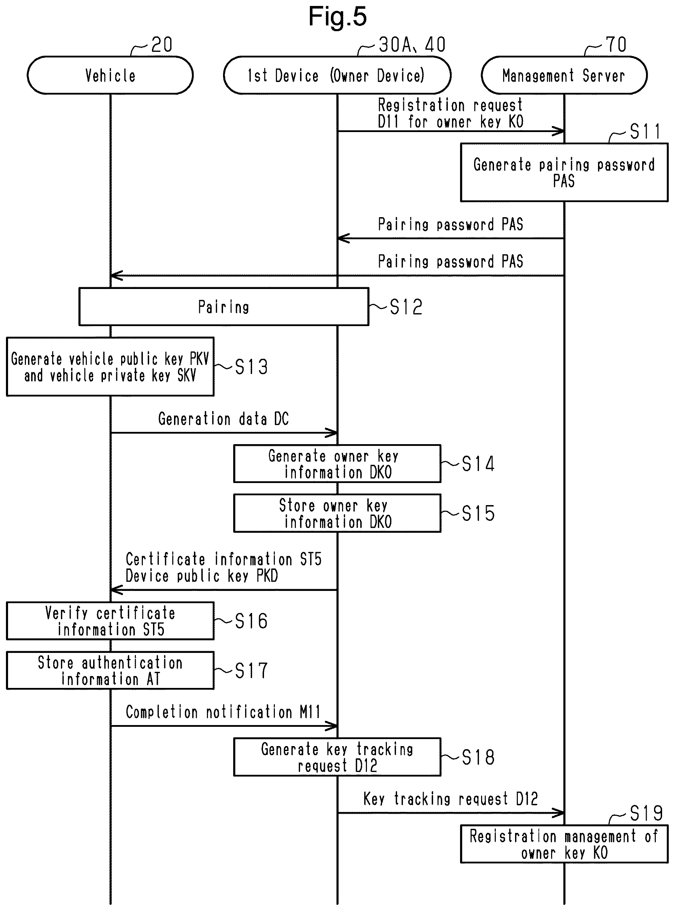

As illustrated in Fig. 5, the management system 10 executes a series of processes to register the owner key KO. In the present example, among the devices 30 that do not store the key information DK indicating the owner key KO, the first device 30A is designated to become the owner device 40.

When the management system 10 registers the owner key KO, the key information DK indicating the owner key KO is stored in the first device 30A. When the management system 10 registers the owner key KO, the key authentication information AT that authenticates the owner key KO is stored in the vehicle 20. As a result, the first device 30A becomes the owner device 40. The present example assumes that necessary applications have been installed in the first device 30A prior to the registration of the owner key KO.

When the management server 70 obtains a registration request D11 for the owner key KO from, for example, the first device 30A, the management server 70 starts the series of processes from step S11. In step S11, the management server 70 generates the pairing password PAS. Then, the management server 70 transmits information indicating the pairing password PAS to the vehicle 20 and the first device 30A.

The vehicle 20 receives the pairing password PAS. When the vehicle 20 is switched to a pairing mode through the vehicle HMI 22 after receiving the pairing password PAS, the vehicle 20 stands by in a state in which the vehicle 20 can receive the password from the first device 30A. Then, the vehicle 20 proceeds to step S12.

In step S12, the vehicle 20 performs a pairing process with the first device 30A. When the pairing process is performed, the vehicle 20 establishes a secure channel for data transmission between the vehicle 20 and the first device 30A. The pairing process is performed using the pairing password PAS sent from the management server 70 to the vehicle 20 and the first device 30A. When the pairing process is completed, the vehicle 20 proceeds to step S13.

In step S13, the vehicle 20 generates the vehicle public key PKV, which is a public key of the vehicle 20, and a vehicle private key SKV, which is a private key of the vehicle 20. Then, the vehicle 20 transmits generation data DC for generating the owner key KO to the first device 30A through the secure channel. The generation data DC includes the vehicle identification information ST1 and the vehicle public key information ST7 that indicates the vehicle public key PKV. The first device 30A receives the generation data DC. Then, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A becomes the owner device 40. Subsequently, the first device 30A transmits, to the vehicle 20, the certificate information ST5 related to the owner key KO, and the device public key information ST6 indicating the device public key PKD.

When the vehicle 20 receives the certificate information ST5 and the device public key information ST6, the vehicle 20 performs step S16. In step S16, the vehicle 20 verifies the certificate information ST5. When verification of the certificate information ST5 is completed, the vehicle 20 proceeds to step S17.

In step S17, the vehicle 20 stores the device public key information ST6, which indicates the device public key PKD, as the key authentication information AT. Then, the vehicle 20 transmits, to the first device 30A, a completion notification M11 indicating that the key authentication information AT has been stored.

When the first device 30A receives the completion notification M11, the first device 30A performs step S18. In step S18, the first device 30A generates a key tracking request D12 for the owner key KO. The key tracking request D12 is a signal that requests the management server 70 to update the database DB. The first device 30A transmits the key tracking request D12 for the owner key KO via the device server 60 to the management server 70.

When the management server 70 receives the key tracking request D12, the management server 70 performs step S19. In step S19, the management server 70 performs registration management of the owner key KO. Specifically, the management server 70 stores the first device 30A as the device 30 to which the owner key KO is registered in the data block DA of the database DB related to the vehicle 20. This ends the series of processes executed by the management system 10 to register the owner key KO.

### Registration of Friend Key

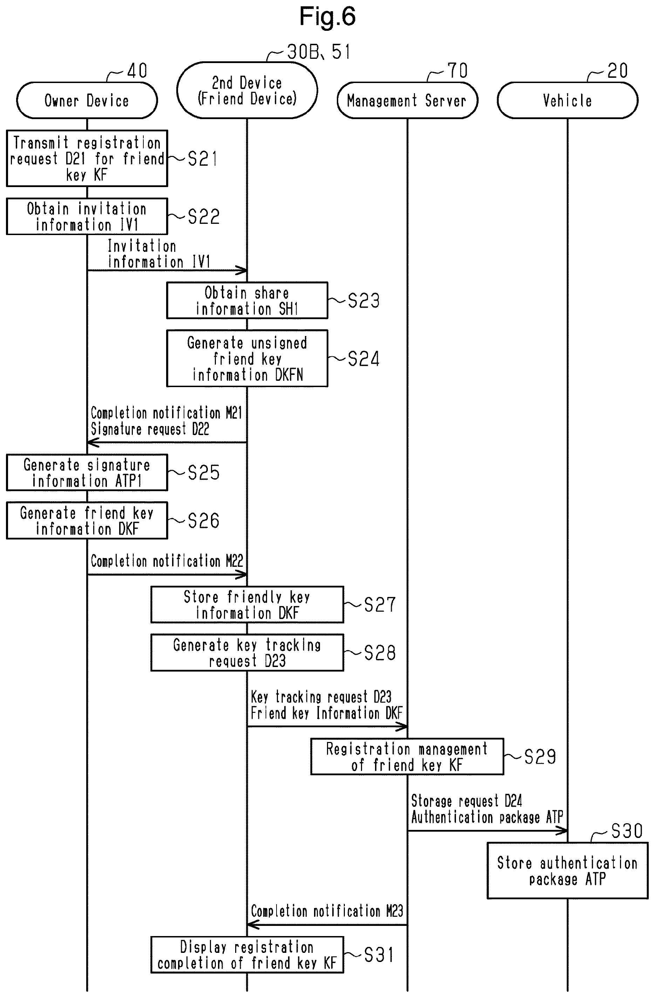

As illustrated in Fig. 6, the management system 10 executes a series of processes to register the friend key KF. In the present example, among the devices 30 that do not store the friend key information DKF, the second device 30B is designated to become the friend device 51 through the series of processes.

When the owner device 40 receives an operation that requests registration of the friend key KF, the owner device 40 starts the series of processes from step S21. In step S21, the owner device 40 transmits the registration request D21 for the friend key KF to a relay server (not shown). Then, the owner device 40 proceeds to step S22.

In step S22, the owner device 40 obtains invitation information IV1 for sharing a digital key from the relay server. The invitation information IV1 includes, for example, a uniform resource locator (URL) link. Share information SH1 necessary for sharing the digital key can be obtained through the URL link. Then, the owner device 40 transmits the invitation information IV1 to the second device 30B.

When the second device 30B receives the invitation information IV1, the second device 30B performs step S23. In step S23, the second device 30B obtains the share information SH1 from the invitation information IV1. Specifically, the second device 30B downloads the share information SH1 through the URL link.

The share information SH1 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the owner device 40. Then, the second device 30B proceeds to step S24.

In step S24, the second device 30B generates unsigned friend key information DKFN using the share information SH1. The unsigned friend key information DKFN is the friend key information DKF without the signature information ATP1. Specifically, the second device 30B generates various types of information included in the obtained share information SH1 as various types of information of the unsigned friend key information DKFN. Then, the second device 30B transmits, to the owner device 40, a completion notification M21 indicating that the generated unsigned friend key information DKFN has been uploaded through the URL link, and a signature request D22 that requests a signature.

The owner device 40 receives the completion notification M21 and the signature request D22 from the second device 30B. When the owner device 40 receives the completion notification M21, the owner device 40 obtains the unsigned friend key information DKFN. When the owner device 40 receives the signature request D22, the owner device 40 performs step S25 in response to an operation performed on the owner device 40.

In step S25, the owner device 40 generates the signature information ATP1. More specifically, the owner device 40 causes the device HMI 32 to present the obtained unsigned friend key information DKFN, and accepts an operation indicating that the user of the owner device 40 has agreed to registration of the friend key KF. When the owner device 40 receives such an operation, the owner device 40 obtains a signature based on the performed operation. Then, the owner device 40 proceeds to step S26.

In step S26, the owner device 40 adds the signature information ATP1 to the unsigned friend key information DKFN. That is, the owner device 40 generates the friend key information DKF. Then, the owner device 40 uploads the generated friend key information DKF through the URL link included in the invitation information IV1. The owner device 40 transmits, to the second device 30B, a completion notification M22 indicating that the generated friend key information DKF has been uploaded through the URL link.

The second device 30B obtains the completion notification M22. Then, the second device 30B performs step S27. In step S27, the second device 30B downloads and stores the friend key information DKF. As a result, the second device 30B becomes the friend device 51. Subsequently, the second device 30B proceeds to step S28.

In step S28, the second device 30B generates a key tracking request D23 for the friend key KF. The second device 30B transmits the friend key information DKF and the key tracking request D23 for the friend key KF to the management server 70.

When the management server 70 receives the key tracking request D23 for the friend key KF, the management server 70 performs step S29. In step S29, the management server 70 performs registration management of the friend key KF.

Specifically, the management server 70 checks whether the friend key KF, which is the subject of the key tracking request D23, is included in a rejection list. The rejection list is a list of the shareable keys KS, including the friend keys KF and the guest keys KN, for which deletion requests have been received. When the subject friend key KF is included in the rejection list, the management server 70 transmits, to the second device 30B, a notification indicating that the key tracking request D23 cannot be accepted.

When the subject friend key KF of the received key tracking request D23 is not included in the rejection list, the management server 70 registers the subject friend key KF of the received key tracking request D23 to the database DB. More specifically, the management server 70 stores the second device 30B as the device 30 that is registered as the friend device 51 in the data block DA of the database DB related to the vehicle 20. The management server 70 stores the relationship between the second device 30B and the owner device 40 with reference to the obtained friend key information DKF.

Then, the management server 70 transmits, to the vehicle 20, the authentication package ATP included in the friend key information DKF, and a storage request D24 that requests storage of the authentication package ATP. That is, the management server 70 transmits, to the vehicle 20, the device public key information ST6 indicating the device public key PKD of the friend device 51. Also, the management server 70 notifies the vehicle 20 that the device public key PKD has been signed by the owner device 40.

When the vehicle 20 receives the storage request D24 and the authentication package ATP from the management server 70, the vehicle 20 performs step S30. In step S30, the vehicle 20 stores the received authentication package ATP as the key authentication information AT used for authentication of the friend key KF.

After completing the registration management, the management server 70 transmits a completion notification M23 of the key tracking to the second device 30B.

When the second device 30B receives the completion notification M23 of the key tracking, the second device 30B performs step S31. In step S31, the second device 30B causes the device HMI 32 to present information indicating that the friend key KF has been registered. For example, the second device 30B causes the device HMI 32 to present an image indicating that the friend key KF has been registered. For example, the second device 30B causes the device HMI 32 to display an image indicating that the friend key KF has been registered. This ends the series of processes executed by the management system 10 to register the friend key KF.

### Registration of Guest Key

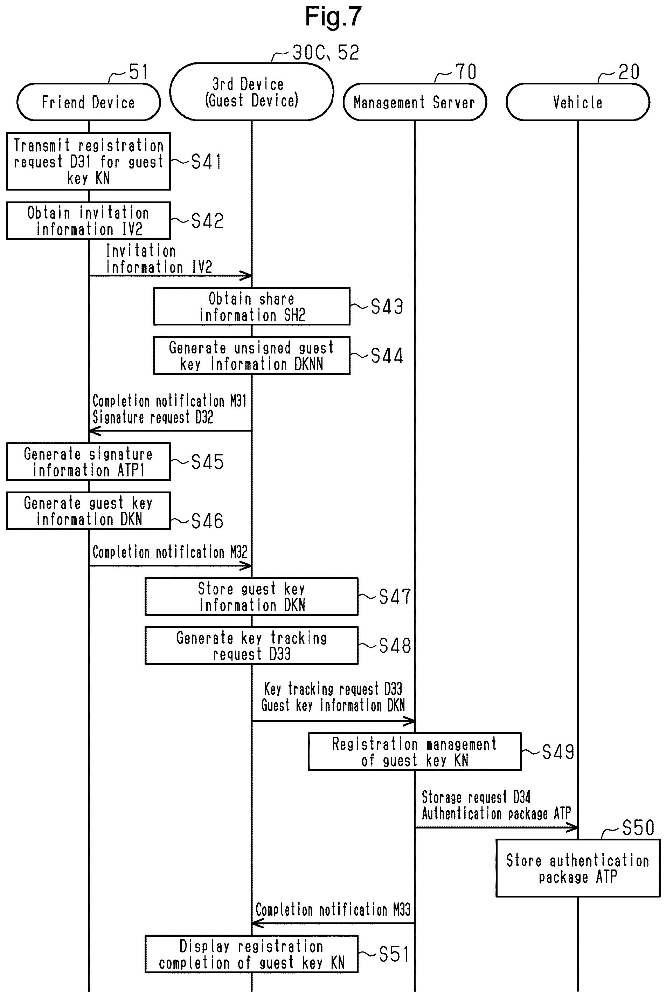

As illustrated in Fig. 7, the management system 10 executes a series of processes to register the guest key KN. In the present example, among the devices 30 that do not store the guest key information DKN, the third device 30C is designated to become the guest device 52 through the series of processes.

When the friend device 51 receives an operation that requests registration of the guest key KN, the friend device 51 starts the series of processes from step S41. In step S41, the friend device 51 transmits the registration request D31 for the guest key KN to a relay server (not shown). Then, the friend device 51 proceeds to step S42.

In step S42, the friend device 51 obtains invitation information IV2 for sharing a digital key from the relay server. The invitation information IV2 includes, for example, a URL link. Share information SH2 necessary for sharing the digital key can be obtained through the URL link. Then, the friend device 51 transmits the invitation information IV2 to the third device 30C.

When the third device 30C receives the invitation information IV2, the third device 30C performs step S43. In step S43, the third device 30C obtains the share information SH2 from the invitation information IV2. Specifically, the second device 30B downloads the share information SH2 through the URL link.

The share information SH2 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the friend device 51. Then, the third device 30C proceeds to step S44.

In step S44, the third device 30C generates unsigned guest key information DKNN using the share information SH2. The unsigned guest key information DKNN is the guest key information DKN without the signature information ATP1. Specifically, the third device 30C generates various types of information included in the obtained share information SH2 as various types of information of the unsigned guest key information DKNN. Then, the third device 30C transmits, to the friend device 51, a completion notification M31 indicating that the generated unsigned guest key information DKNN has been uploaded through the URL link, and a signature request D32 that requests a signature.

The friend device 51 receives the completion notification M31 and the signature request D32 from the third device 30C. When the friend device 51 receives the completion notification M31, the friend device 51 obtains the unsigned guest key information DKNN. When the friend device 51 receives the signature request D32, the friend device 51 performs step S45 in response to an operation performed on the friend device 51.

In step S45, the friend device 51 generates the signature information ATP1. More specifically, the friend device 51 causes the device HMI 32 to present the obtained unsigned guest key information DKNN, and accepts an operation indicating that the user of the friend device 51 has agreed to registration of the guest key KN. When the friend device 51 receives such an operation, the friend device 51 obtains a signature based on the performed operation. Then, the friend device 51 proceeds to step S46.

In step S46, the friend device 51 adds the signature information ATP1 to the unsigned guest key information DKNN. That is, the friend device 51 generates the guest key information DKN. Then, the friend device 51 uploads the generated guest key information DKN through the URL link included in the invitation information IV2. The friend device 51 transmits, to the third device 30C, a completion notification M32 indicating that the generated guest key information DKN has been uploaded through the URL link.

The third device 30C obtains the completion notification M32. Then, the third device 30C performs step S47. In step S47, the third device 30C downloads and stores the guest key information DKN. As a result, the third device 30C becomes the guest device 52. Subsequently, the third device 30C proceeds to step S48.

In step S48, the third device 30C generates a key tracking request D33 for the guest key KN. The third device 30C transmits the guest key information DKN and the key tracking request D33 for the guest key KN to the management server 70.

When the management server 70 receives the key tracking request D33 for the guest key KN, the management server 70 performs step S49. In step S49, the management server 70 performs registration management of the guest key KN.

Specifically, the management server 70 checks whether the guest key KN, which is the subject of the key tracking request D33, is included in the rejection list. When the guest key KN is included in the rejection list, the management server 70 transmits, to the third device 30C, a notification indicting that the key tracking request D33 cannot be accepted.

When the guest key KN is not included in the rejection list, the management server 70 registers the subject guest key KN of the key tracking request D33 to the database DB. More specifically, the management server 70 stores the third device 30C as the device 30 that is registered as the guest device 52 in the data block DA of the database DB related to the vehicle 20. The management server 70 stores the relationship between the third device 30C and the friend device 51 with reference to the obtained guest key information DKN. Specifically, the management server 70 stores the third device 30C as the device 30 that has the guest key KN registered in response to the registration request D31 from the second device 30B.

Then, the management server 70 transmits, to the vehicle 20, the authentication package ATP included in the guest key information DKN, and a storage request D34 that requests storage of the authentication package ATP. That is, the management server 70 transmits, to the vehicle 20, the device public key information ST6 indicating the device public key PKD of the guest device 52. Also, the management server 70 notifies the vehicle 20 that the device public key PKD has been signed by the friend device 51.

When the vehicle 20 receives the authentication package ATP and the storage request D34, the vehicle 20 performs step S50. In step S50, the vehicle 20 stores the received authentication package ATP. Specifically, the vehicle 20 stores the authentication package ATP as the key authentication information AT that authenticates the guest key KN.

After completing the registration management, the management server 70 transmits a completion notification M33 of the key tracking to the second device 30B.

When the second device 30B receives the completion notification M33 of the key tracking, the second device 30B performs step S51. In step S51, the third device 30C causes the device HMI 32 to present information indicating that the guest key KN has been registered. For example, the third device 30C causes the device HMI 32 to display an image indicating that the guest key KN has been registered. This ends the series of processes executed by the management system 10 to register the guest key KN.

### Deletion Management

A deletion management performed by the management system 10 to delete a deletion subject digital key will now be described. The deletion management includes a group key deletion process. The group key deletion process includes deleting a digital key registered in response to a registration request from the device 30, to which the deletion subject digital key is registered.

In the present embodiment, the deletion subject digital key is the second digital key DK2, which is the friend key KF. A series of processes related to the deletion management for deleting the second digital key DK2 will be described below. When deleting the second digital key DK2, the management system 10 also deletes the third digital key DK3 and the fourth digital key DK4 by executing the group key deletion process. The third digital key DK3 and the fourth digital key DK4 were each registered in response to a registration request from the second device 30B, to which the second digital key DK2 is registered. The third digital key DK3 and the fourth digital key DK4 may each be referred to as "the registered digital key".

The description hereafter will illustrate an overall process that shifts a state in which the second digital key DK2 is registered to a state in which the second digital key DK2 is no longer registered. Hereafter, the processing executed by the vehicle processor 27 will be described as the processing executed by the vehicle 20. The processing executed by the device processor 36 will be described as the processing executed by the device 30. The processing executed by the server processor 71 will be described as the processing executed by the management server 70.

### Overview of Deletion Management Including Group Key Deletion Process

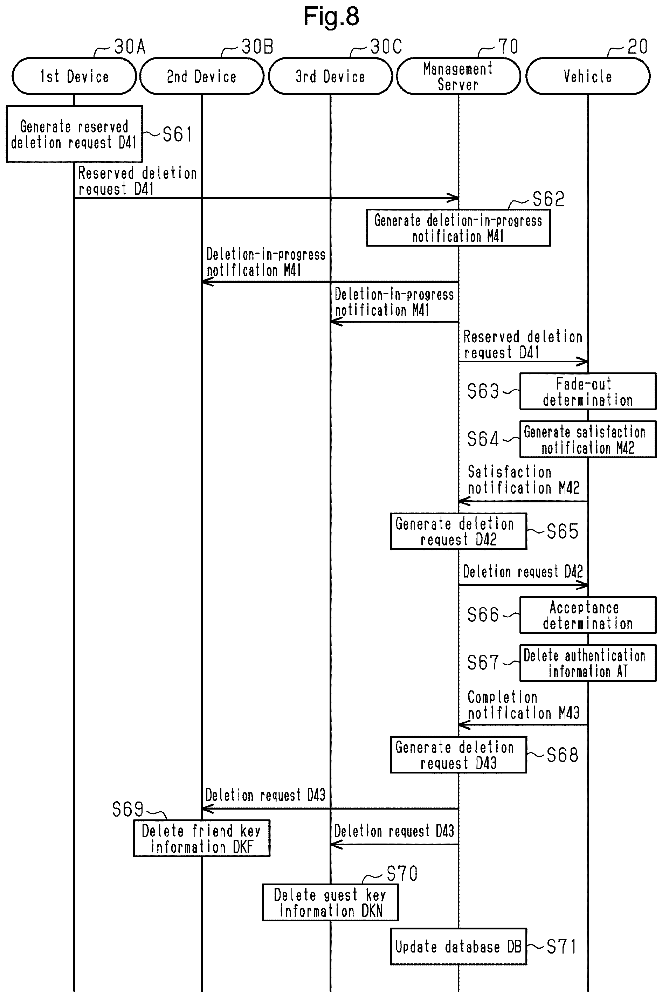

As illustrated in Fig. 8, when deleting the second digital key DK2 in response to the deletion reservation request D41 from the first device 30A, the management system 10 performs a series of processes to execute the group key deletion process. The group key deletion process also deletes the third digital key DK3 and the fourth digital key DK4.

When the first device 30A receives an operation that requests deletion of the second digital key DK2, the first device 30A starts the series of processes from step S61 (Fig. 8). In step S61, the first device 30A generates the deletion reservation request D41 for the second digital key DK2. The deletion reservation request D41 is a request for a deletion reservation.

The deletion reservation request D41 includes a signal that requests deletion of the second digital key DK2, the digital key identification information ST3 indicating the second digital key DK2, and information indicating the deletion condition RC. The deletion condition RC is a condition for deleting the deletion subject digital key after the deletion reservation request D41 is received. The deletion condition RC is determined in advance. The deletion condition RC may be referred to as a specified condition. The deletion condition RC includes that the vehicle 20 authenticates at least one digital key to the vehicle 20 that is different from the second digital key DK2. As stated above, the second digital key DK2 is the deletion subject digital key. The first device 30A transmits the deletion reservation request D41 for the second digital key DK2 to the management server 70.

When the management server 70 receives the deletion reservation request D41 for the second digital key DK2, the management server 70 performs step S62. In step S62, the management server 70 generates a deletion-in-progress notification M41 indicating that deletion is in progress in accordance with the deletion reservation request D41.

The management server 70 transmits the deletion-in-progress notification M41 to the second device 30B, the third device 30C, and the fourth device 30D. The third device 30C and the fourth device 30D are the guest devices 52 to which the guest keys KN are respectively registered in response to a registration request from the second device 30B. The fourth device 30D is not shown in Fig. 8. Then, the management server 70 transmits the deletion reservation request D41 to the vehicle 20.

When the vehicle 20 receives the deletion reservation request D41, the vehicle 20 performs step S63. In step S63, the vehicle 20 repeatedly performs a fade-out determination until the vehicle 20 determines that the deletion condition RC is satisfied. The vehicle 20 repeatedly performs the fade-out determination to determine whether the deletion condition RC is satisfied. Specifically, the vehicle 20 determines that the deletion condition RC is satisfied when the vehicle 20 authenticates at least one digital key that is different from the deletion subject digital key. When the vehicle 20 determines that the deletion condition RC is satisfied, the vehicle 20 proceeds to step S64.

In step S64, the vehicle 20 generates a deletion condition satisfaction notification M42 indicating that the deletion condition RC has been satisfied. Then, the vehicle 20 transmits the deletion condition satisfaction notification M42 to the management server 70.

When the management server 70 receives the deletion condition satisfaction notification M42, the management server 70 performs step S65. In step S65, the management server 70 generates a deletion acceptance request D42. The deletion acceptance request D42 is a request for deletion of the key authentication information AT of the deletion subject digital key and the key authentication information AT of the digital keys registered in response to a registration request from the device 30, to which the deletion subject digital key is registered.

Specifically, the deletion acceptance request D42 includes a deletion request for the key authentication information AT of the second digital key DK2, which is the deletion subject digital key. Further, the deletion acceptance request D42 includes a deletion request for the key authentication information AT of the third digital key DK3, which is registered based on the deletion subject digital key. Furthermore, the deletion acceptance request D42 includes a deletion request for the key authentication information AT of the fourth digital key DK4, which is registered based on the deletion subject digital key. After generating the deletion acceptance request D42, the management server 70 transmits the deletion acceptance request D42 to the vehicle 20.

When the vehicle 20 receives the deletion acceptance request D42, the vehicle 20 performs step S66. In step S66, the vehicle 20 performs an acceptance determination of the deletion acceptance request D42. Details of the acceptance determination of the deletion acceptance request D42 will be described later. When the vehicle 20 accepts the deletion acceptance request D42, that is, when the vehicle 20 determines to execute the group key deletion process, the vehicle 20 proceeds to step S67.

In step S67, the vehicle 20 deletes, in accordance with the deletion acceptance request D42, the key authentication information AT of the second digital key DK2, the key authentication information AT of the third digital key DK3, and the key authentication information AT of the fourth digital key DK4. In other words, in step S67, the vehicle 20 executes the group key deletion process. Then, the vehicle 20 transmits a completion notification M43 to the management server 70. The completion notification M43 indicates that the key authentication information AT has been deleted in accordance with the deletion acceptance request D42.

When the management server 70 receives the completion notification M43, the management server 70 performs step S68. In step S68, the management server 70 generates a deletion execution request D43. The deletion execution request D43 requests deletion of the key information DK of the deletion subject digital key and the key information DK of the digital keys registered in response to a registration request from the device 30, to which the deletion subject digital key is registered.

Specifically, the deletion execution request D43 includes a deletion request for the key information DK indicating the second digital key DK2, which is the deletion subject digital key. Further, the deletion execution request D43 includes a deletion request for the key information DK indicating the third digital key DK3, which is registered based on the deletion subject digital key. Furthermore, the deletion execution request D43 includes a deletion request for the key information DK indicating the fourth digital key DK4, which is registered based on the deletion subject digital key. After generating the deletion execution request D43, the management server 70 transmits the deletion execution request D43 to the second device 30B, the third device 30C, and the fourth device 30D.

When the second device 30B receives the deletion execution request D43, the second device 30B performs step S69. In step S69, the second device 30B deletes, in accordance with the deletion execution request D43, the key information DK indicating the second digital key DK2. In the present embodiment, the key information DK indicating the second digital key DK2 is the friend key information DKF.

When the third device 30C receives the deletion execution request D43, the third device 30C performs step S70. In step S70, the third device 30C deletes, in accordance with the deletion execution request D43, the key information DK indicating the digital key registered based on the deletion subject digital key. Specifically, the third device 30C deletes the key information DK indicating the third digital key DK3. In the present embodiment, the key information DK indicating the third digital key DK3 is the guest key information DKN. The deletion acceptance request D42 is a deletion request related to group key information. The group key information is related to one or more digital keys that are subject to the group key deletion process (S70).

In the same manner as the third device 30C, when the fourth device 30D receives the deletion execution request D43, the fourth device 30D performs step S70. In step S70, the fourth device 30D deletes, in accordance with the deletion execution request D43, the key information DK indicating the digital key registered based on the deletion subject digital key. Specifically, the fourth device 30D deletes the key information DK indicating the fourth digital key DK4. In the present embodiment, the key information DK indicating the fourth digital key DK4 is the guest key information DKN.

After transmitting the deletion execution request D43, the management server 70 proceeds to step S71. In step S71, the management server 70 updates the database DB. Specifically, the management server 70 deletes the second device 30B, the third device 30C, and the fourth device 30D from the data block DA of the database DB related to the vehicle 20. Then, the management system 10 ends this deletion management.

### Acceptance Determination of Deletion Acceptance Request

The acceptance determination of the deletion acceptance request D42 performed by the vehicle manager 26 will now be described in detail.

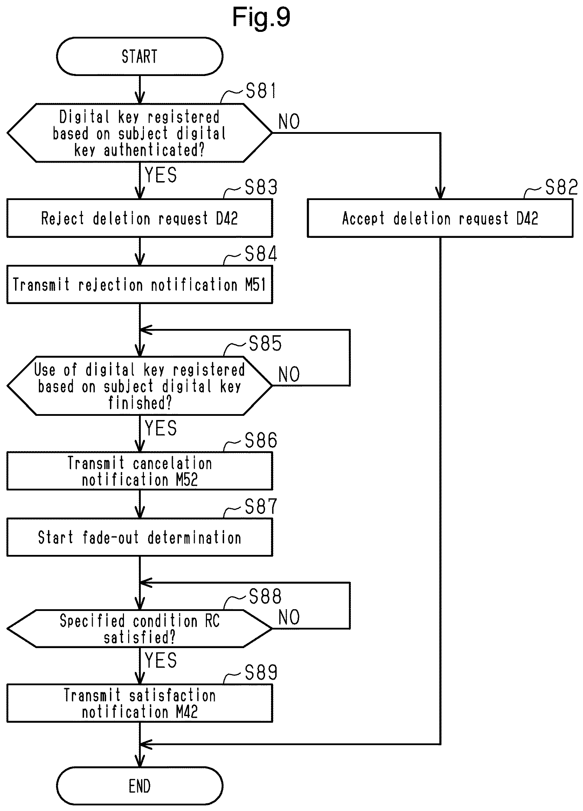

As illustrated in Fig. 9, the vehicle processor 27 starts the acceptance determination from step S81. In step S81, the vehicle processor 27 determines whether any of the digital keys registered based on the deletion subject digital key is authenticated by the vehicle 20. More specifically, the vehicle processor 27 determines whether the vehicle 20 has authenticated any of the digital keys registered based on the deletion subject digital key during a period from when the vehicle 20 received the deletion reservation request D41 to when the vehicle processor 27 received the deletion acceptance request D42.

Specifically, the deletion subject digital key is the second digital key DK2. The digital keys registered based on the deletion subject digital key are the third digital key DK3 and the fourth digital key DK4.

When at least one of the third digital key DK3 and the fourth digital key DK4 is authenticated by the vehicle 20, the vehicle processor 27 gives an affirmative determination in step S81. When neither the third digital key DK3 nor the fourth digital key DK4 is authenticated by the vehicle 20, the vehicle processor 27 gives a negative determination in step S81.

When none of the digital keys registered based on the deletion subject digital key is authenticated by the vehicle 20 (S81: NO), the vehicle processor 27 proceeds to step S82. In step S82, the vehicle processor 27 determines to accept the deletion acceptance request D42. In other words, the vehicle processor 27 determines to execute the group key deletion process. Then, the vehicle processor 27 ends this acceptance determination of the deletion acceptance request D42.

Subsequently, the management system 10 continues the deletion management illustrated in Fig. 8 from step S67 to delete the deletion subject digital key and the digital keys registered based on the deletion subject digital key. Specifically, the vehicle processor 27 accepts the deletion acceptance request D42, which includes the deletion request for the deletion subject digital key, and executes the group key deletion process.

As illustrated in Fig. 9, when at least one of the digital keys registered based on the deletion subject digital key is authenticated by the vehicle 20 (S81: YES), the vehicle processor 27 proceeds to step S83. In step S83, the vehicle processor 27 rejects the deletion acceptance request D42.

When the vehicle processor 27 only performs step S83, the vehicle processor 27 does not issue an instruction to delete the key authentication information AT in step S67 shown in Fig. 8. In other words, in this case, the management system 10 does not execute the group key deletion process.

That is, even when the deletion acceptance request D42 is generated, the management system 10 does not issue an instruction to delete the deletion subject digital key and the digital keys registered based on the deletion subject digital key. In this manner, when the vehicle processor 27 rejects the deletion acceptance request D42, the group key deletion process is not executed.

After rejecting the deletion acceptance request D42, the vehicle processor 27 proceeds to step S84. In step S84, the vehicle processor 27 transmits a deletion rejection notification M51 to the device 30 that is the source of the deletion request for the deletion subject digital key. The deletion rejection notification M51 indicates that deletion of the deletion subject digital key in response to satisfaction of the deletion condition RC has been rejected. In the present example, the first device 30A is the device 30 that is the source of the deletion request for the deletion subject digital key.

That is, when the vehicle processor 27 rejects the deletion acceptance request D42, the vehicle processor 27 transmits the deletion rejection notification M51 to the device 30 that is the source of the deletion request for the deletion subject digital key. As stated above, the deletion reservation request D41 requested for deletion of the deletion subject digital key upon satisfaction of the deletion condition RC. Then, the vehicle processor 27 proceeds to step S85.

In step S85, the vehicle processor 27 determines whether use of the authenticated digital key is finished. The use of the authenticated digital key is finished when the authenticated digital key returns to a state unable to control the vehicle 20.

In an example in which the authenticated digital key is enabled to unlock the vehicle 20, the use of the digital key is finished when a predetermined period elapses, while the vehicle 20 is at a standstill, from when the vehicle 20 is locked.

In another example in which the authenticated digital key is enabled to start the vehicle 20, the use of the digital key is finished when a predetermined period elapses, while the vehicle 20 is at a standstill, from when the vehicle 20 is locked.

In contrast, in a case in which the authenticated digital key is enabled to control the vehicle 20, the use of the digital key is not finished if the digital key is still controlling the vehicle 20 or if a predetermined period has not elapsed from when the digital key stopped controlling the vehicle 20.

When the vehicle processor 27 determines that the use of the authenticated digital key is not finished (S85: NO), the vehicle processor 27 repeats step S85. When the vehicle processor 27 determines that the use of the authenticated digital key is finished (S85: YES), the vehicle processor 27 cancels the rejection of the deletion acceptance request D42 and proceeds to step S86.

In step S86, the vehicle processor 27 transmits, to the management server 70 and the device 30 that is the source of the deletion request for the deletion subject digital key, a rejection cancellation notification M52 indicating that the rejection of the deletion acceptance request D42 has been cancelled. In the present example, the first device 30A is the device 30 that is the source of the deletion request.

That is, when the vehicle processor 27 cancels the rejection of deletion of the deletion subject digital key, the vehicle processor 27 transmits the rejection cancellation notification M52 to the management server 70 and the first device 30A. Then, the vehicle processor 27 proceeds to step S87.

In step S87, the vehicle processor 27 again starts repeating the fade-out determination until the vehicle processor 27 determines that the deletion condition RC is satisfied. Then, the vehicle processor 27 proceeds to step S88.

In step S88, the vehicle processor 27 determines whether the deletion condition RC is satisfied based on the performed fade-out determination. When the deletion condition RC is not satisfied (S88: NO), the vehicle processor 27 repeats step S88. When the deletion condition RC is satisfied (S88: YES), the vehicle processor 27 proceeds to step S89.

In step S89, the vehicle processor 27 transmits the deletion condition satisfaction notification M42 to the management server 70. This ends the series of processes executed by the vehicle processor 27 to perform this acceptance determination of the deletion acceptance request D42.

In this manner, the management system 10 performs the deletion management with multiple computers included in the management system 10 so as to execute the group key deletion process. Such computers include the multiple device processors 36, the server processor 71, and the vehicle processor 27. That is, the management system 10 performs the deletion management illustrated in Fig. 8 to implement a deletion management method for executing the group key deletion process.

### Operation of the First Embodiment

When the vehicle manager 26 accepts the deletion acceptance request D42, the management system 10 executes the group key deletion process through the deletion management illustrated in Fig. 8. As a result, when deleting the deletion subject digital key, the management system 10 also deletes the digital keys registered based on the deletion subject digital key.

More specifically, when the vehicle manager 26 rejects the deletion acceptance request D42 in step S83 of the acceptance determination illustrated in Fig. 9, the vehicle manager 26 does not issue an instruction to delete the key authentication information AT in accordance with the deletion acceptance request D42. That is, the management system 10 does not execute the group key deletion process.

When the vehicle manager 26 rejects the deletion acceptance request D42 in step S83 of the acceptance determination, the management server 70 does not receive the completion notification M43 shown in Fig. 8. Accordingly, the management server 70 does not transmit, to the device 30, the deletion execution request D43 for the key information DK indicating the deletion subject digital key and the key information DK indicating the digital keys registered based on the deletion subject digital key. Therefore, the management system 10 does not issue an instruction to delete the key information DK indicating the deletion subject digital key and the key information DK indicating the digital keys registered based on the deletion subject digital key.

As a result, the key authentication information AT and the key information DK remain undeleted, so that the deletion subject digital key and the digital keys registered based on the deletion subject digital key are maintained in an enabled state, that is, a registered state.

Thereafter, when the deletion condition RC is satisfied, the vehicle manager 26 transmits the deletion condition satisfaction notification M42 to the management server 70. When the management server 70 receives the deletion condition satisfaction notification M42, the management server 70 again performs step S65 shown in Fig. 8. Then, the management server 70 again transmits the deletion acceptance request D42 to the vehicle 20. When the vehicle 20 receives the deletion acceptance request D42, the vehicle manager 26 again performs the series of processes illustrated in Fig. 9.

Thereafter, when none of the digital keys registered based on the deletion subject digital key is authenticated (S81: NO) in the acceptance determination illustrated in Fig. 9, the vehicle manager 26 accepts the deletion acceptance request D42 in step S82. When the vehicle manager 26 accepts the deletion acceptance request D42, the management server 70 proceeds to step S67 shown in Fig. 8.

In this case, the vehicle manager 26 deletes the key authentication information AT in step S67 shown in Fig. 8 in accordance with the deletion acceptance request D42. That is, when the vehicle manager 26 accepts the deletion acceptance request D42, the management system 10 executes the group key deletion process.

In this manner, when the vehicle 20 authenticates any of the digital keys registered based on the deletion subject digital key, the management system 10 does not execute the group key deletion process. In contrast, when the vehicle 20 does not authenticate any of the digital keys registered based on the deletion subject digital key, the management system 10 executes the group key deletion process.

### Advantages of the First Embodiment

(1-1) The management system 10 does not execute the group key deletion process when the vehicle 20 authenticates at least one digital key registered based on the deletion subject digital key. Therefore, when deleting the deletion subject digital key, one or more digital keys registered based on the deletion subject digital key will not be deleted if the vehicle 20 authenticates any of the one or more digital keys. This allows the management system 10 to avoid a situation in which the user of the digital key registered based on the deletion subject digital key becomes unable to use the vehicle 20.

(1-2) In a case in which the vehicle 20 is used as a rental car or a shared car, the user of the vehicle 20 may be switched, for example, from the user of the second device 30B to the user of the fifth device 30E. The deletion condition RC includes that the vehicle 20 authenticates a digital key that is different from the deletion subject digital key.

Accordingly, the pre-switch deletion subject digital key will be deleted when a new post-switch digital key is authenticated. Specifically, the second digital key DK2 to the fourth digital key DK4 are deleted when the vehicle 20 authenticates any of the fifth digital key DK5 to the seventh digital key DK7. This allows the management system 10 to delete the pre-switch digital keys simultaneously with the switch of the users.

(1-3) When the vehicle 20 does not authenticate any digital key registered based on the deletion subject digital key, the vehicle manager 26 accepts the deletion acceptance request D42. Accordingly, the vehicle manager 26 deletes the key authentication information AT of one or more digital keys subject to the group key deletion process. Specifically, when the vehicle manager 26 deletes the key authentication information AT of the deletion subject digital key, the vehicle manager 26 also deletes the key authentication information AT of any digital key registered based on the deletion subject digital key.

In contrast, when the vehicle 20 authenticates at least one digital key registered based on the deletion subject digital key, the vehicle manager 26 rejects the deletion acceptance request D42. That is, the vehicle manager 26 does not issue an instruction to delete the key authentication information AT of the one or more digital keys subject to the group key deletion process. Therefore, the key authentication information AT of the one or more digital keys registered based on the deletion subject digital key is not deleted.

In this manner, when the vehicle manager 26 rejects the deletion acceptance request D42 during the deletion management performed by the management system 10, the management system 10 suspends deletion of the deletion subject digital key and any digital key registered based on the deletion subject digital key.

(1-4) When the vehicle manager 26 rejects the deletion acceptance request D42, the vehicle manager 26 transmits the deletion rejection notification M51 to the first device 30A, which is the source of the deletion request for the deletion subject digital key. This allows the user of the first device 30A to recognize that deletion of the deletion subject digital key has been rejected after the user operated the first device 30A to transmit the deletion reservation request D41.

(1-5) When the use of the authenticated digital key is finished after the vehicle manager 26 rejects the deletion acceptance request D42, the vehicle manager 26 cancels the rejection of the deletion acceptance request D42. This allows the management system 10 to ensure that the deletion subject digital key is deleted when the vehicle 20 again receives the deletion acceptance request D42 after the use of the authentication digital key is finished.

(1-6) When the vehicle manager 26 cancels the rejection of the deletion acceptance request D42, the vehicle manager 26 transmits the rejection cancellation notification M52 to the first device 30A, which is the source of the deletion request for the deletion subject digital key. This allows the user of the first device 30A to recognize that deletion of the deletion subject digital key was rejected and that the rejection was later cancelled.

(1-7) After the vehicle manager 26 cancels the rejection of the deletion acceptance request D42, the vehicle manager 26 again starts to determine whether the deletion condition RC is satisfied. Therefore, when any digital key that is different from both the deletion subject digital key and the digital keys registered based on the deletion subject digital key is authenticated after the use of the authenticated digital key is finished, the vehicle manager 26 transmits the deletion condition satisfaction notification M42 to the management server 70. This allows the management system 10 to delete the deletion subject digital key and the digital keys registered based on the deletion subject digital key without receiving another deletion reservation request D41.

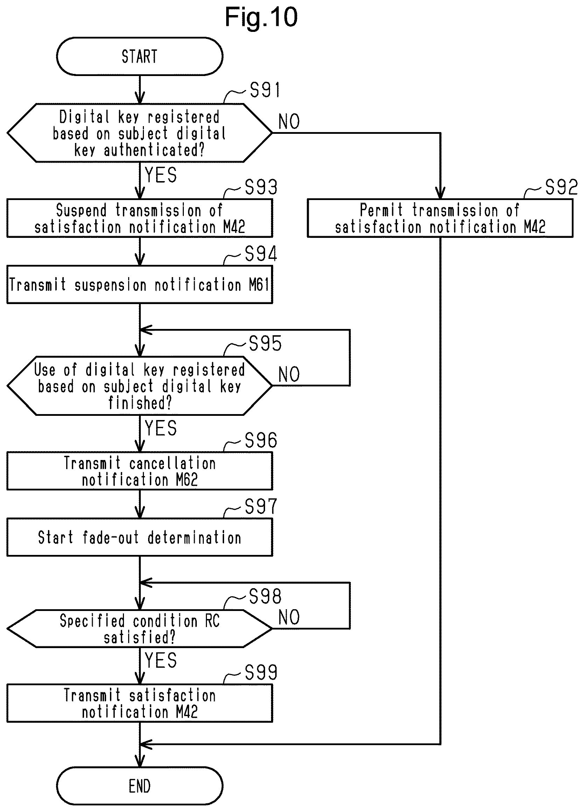

Fig. 10 illustrates a management system 10 in accordance with a second embodiment. The second embodiment mainly differs from the first embodiment in that a transmission permission determination of the deletion condition satisfaction notification M42 is performed instead of the acceptance determination of the deletion acceptance request. The description hereafter will focus on the differences from the first embodiment, and the same aspects will not be described in detail.

Transmission Permission Determination of Deletion Condition Satisfaction Notification

The vehicle manager 26 generates the deletion condition satisfaction notification M42 in step S64 of the series of processes for the deletion management. After generating the deletion condition satisfaction notification M42, the vehicle manager 26 performs the transmission permission determination of the deletion condition satisfaction notification M42 before transmitting the deletion condition satisfaction notification M42 to the management server 70.

As illustrated in Fig. 10, the vehicle processor 27 performs the transmission permission determination from step S91. In step S91, the vehicle processor 27 determines whether any of the digital keys registered based on the deletion subject digital key is authenticated by the vehicle 20. More specifically, the vehicle processor 27 determines whether the vehicle 20 has authenticated any of the digital keys registered based on the deletion subject digital key during a period from when the vehicle 20 received the deletion reservation request D41 to when the vehicle processor 27 generated the deletion condition satisfaction notification M42.

Specifically, the deletion subject digital key is the second digital key DK2. The digital keys registered based on the deletion subject digital key are the third digital key DK3 and the fourth digital key DK4.

When at least one of the third digital key DK3 and the fourth digital key DK4 is authenticated by the vehicle 20, the vehicle processor 27 gives an affirmative determination in step S91. When neither the third digital key DK3 nor the fourth digital key DK4 is authenticated by the vehicle 20, the vehicle processor 27 gives a negative determination in step S91.

When none of the digital keys registered based on the deletion subject digital key is authenticated by the vehicle 20 (S91: NO), the vehicle processor 27 proceeds to step S92. In step S92, the vehicle processor 27 permits transmission of the deletion condition satisfaction notification M42. Then, the vehicle processor 27 ends this transmission permission determination of the deletion condition satisfaction notification M42.

Subsequently, the management system 10 continues the deletion management illustrated in Fig. 8 from step S65 to delete the deletion subject digital key and the digital keys registered based on the deletion subject digital key.

As illustrated in Fig. 10, when at least one of the digital keys registered based on the deletion subject digital key is authenticated by the vehicle 20 (S91: YES), the vehicle processor 27 proceeds to step S93. In step S93, the vehicle processor 27 suspends transmission of the deletion condition satisfaction notification M42.

Since the vehicle processor 27 performs step S93, the management server 70 will not receive the deletion condition satisfaction notification M42 during the deletion management illustrated in Fig. 8. Therefore, even when the deletion condition satisfaction notification M42 is generated, the management system 10 does not generate the deletion acceptance request D42. That is, since the vehicle processor 27 suspends transmission of the deletion condition satisfaction notification M42, the deletion subject digital key and the digital keys registered based on the deletion subject digital key are not deleted.

After suspending transmission of the deletion condition satisfaction notification M42, the vehicle processor 27 proceeds to step S94. In step S94, the vehicle processor 27 transmits, to the device 30 that is the source of the deletion request for the deletion subject digital key, a transmission suspension notification M61 indicating that transmission of the deletion condition satisfaction notification M42 has been suspended. In the present example, the first device 30A is the device 30 that is the source of the deletion request for the deletion subject digital key.

That is, when the vehicle processor 27 suspends transmission of the deletion condition satisfaction notification M42, the vehicle processor 27 transmits the transmission suspension notification M61 to the device 30 that is the source of the request for deletion of the deletion subject digital key. As stated above, the deletion reservation request D41 requested for deletion of the deletion subject digital key upon satisfaction of the deletion condition RC. Then, the vehicle processor 27 proceeds to step S95.

In step S95, the vehicle processor 27 determines whether use of the authenticated digital key is finished. The use of the authenticated digital key is finished when the authenticated digital key returns to a state unable to control the vehicle 20.

When the vehicle processor 27 determines that the use of the authenticated digital key is not finished (S95: NO), the vehicle processor 27 repeats step S95. When the vehicle processor 27 determines that the use of the authenticated digital key is finished (S95: YES), the vehicle processor 27 cancels the suspension of transmission of the deletion condition satisfaction notification M42 and proceeds to step S96.

In step S96, the vehicle processor 27 transmits, to the management server 70 and the device 30 that is the source of the deletion request for the deletion subject digital key, a suspension cancellation notification M62 indicating that the suspension of transmission of the deletion condition satisfaction notification M42 has been cancelled. In the present example, the first device 30A is the device 30 that is the source of the deletion request.

That is, when the vehicle processor 27 cancels the suspension of transmission of the deletion condition satisfaction notification M42, the vehicle processor 27 transmits the suspension cancellation notification M62 to the management server 70 and the first device 30A. Then, the vehicle processor 27 proceeds to step S97.

In step S97, the vehicle processor 27 again starts repeating the fade-out determination until the vehicle processor 27 determines that the deletion condition RC is satisfied. Then, the vehicle processor 27 proceeds to step S98.

In step S98, the vehicle processor 27 determines whether the deletion condition RC is satisfied based on the performed fade-out determination. When the deletion condition RC is not satisfied (S98: NO), the vehicle processor 27 repeats step S98. When the deletion condition RC is satisfied (S98: YES), the vehicle processor 27 proceeds to step S99.

In step S99, the vehicle processor 27 transmits the deletion condition satisfaction notification M42 to the management server 70. Then, the vehicle processor 27 ends this transmission permission determination of the deletion condition satisfaction notification M42.

### Operation of the Second Embodiment

When the vehicle manager 26 suspends transmission of the deletion condition satisfaction notification M42 in step S93 of the transmission permission determination of the deletion condition satisfaction notification M42, the management server 70 does not receive the deletion condition satisfaction notification M42 shown in Fig. 8. Accordingly, the management server 70 does not generate the deletion acceptance request D42 or transmit the deletion acceptance request D42 to the vehicle 20. Therefore, the management server 70 does not instruct the vehicle 20 to delete the key authentication information AT of the deletion subject digital key and the key authentication information AT of the digital keys registered based on the deletion subject digital key.

Further, the management server 70 does not transmit the deletion execution request D43 to the device 30. The deletion execution request D43 is a request for deletion of the key information DK indicating the deletion subject digital key and the key information DK indicating the digital keys registered based on the deletion subject digital key. Therefore, the management server 70 does not instruct the devices 30 to delete the key information DK indicating the deletion subject digital key and the key information DK indicating the digital keys registered based on the deletion subject digital key.

As a result, the key authentication information AT and the key information DK remain undeleted, so that the deletion subject digital key and the digital keys registered based on the deletion subject digital key are maintained in an enabled state. In other words, the deletion subject digital key and the digital keys that are registered based on the deletion subject digital key are maintained in a registered state.

Thereafter, when the deletion condition RC is satisfied, the vehicle manager 26 transmits the deletion condition satisfaction notification M42 to the management server 70. When the management server 70 receives the deletion condition satisfaction notification M42, the management server 70 performs step S65 shown in Fig. 8. When the vehicle 20 receives the deletion acceptance request D42, the vehicle 20 performs step S67. After step S67, the vehicle 20 transmits the completion notification M43 to the management server 70. Then, the management server 70 continues the process from step S68 shown in Fig. 8.

In this case, the vehicle manager 26 deletes the key authentication information AT in step S67 shown in Fig. 8 in accordance with the deletion acceptance request D42. That is, when the vehicle manager 26 accepts the deletion acceptance request D42, the management system 10 executes the group key deletion process.

### Advantages of the Second Embodiment

The second embodiment has the following advantages in addition to advantages (1-1) and (1-2) of the first embodiment.

(2-1) When the vehicle 20 does not authenticate any digital key registered based on the deletion subject digital key, the vehicle manager 26 permits transmission of the deletion condition satisfaction notification M42. This causes the management system 10 to proceed with the deletion management. As a result, the management system 10 executes the group key deletion process.

On the other hand, when the vehicle 20 authenticates at least one digital key registered based on the deletion subject digital key, the vehicle manager 26 suspends transmission of the deletion condition satisfaction notification M42. In other words, the vehicle manager 26 does not cause the management server 70 to generate or transmit the deletion execution request D43. As a result, the vehicle manager 26 does not issue an instruction to delete the key authentication information AT of the deletion subject digital key and one or more digital keys registered based on the deletion subject digital key. That is, the management system 10 does not execute the group key deletion process. Therefore, the key authentication information AT of the one or more digital keys registered based on the deletion subject digital key is not deleted.

In this manner, when the vehicle manager 26 suspends transmission of the deletion condition satisfaction notification M42 during the deletion management performed by the management system 10, the management system 10 suspends deletion of the deletion subject digital key and any digital key registered based on the deletion subject digital key.

(2-2) When the vehicle manager 26 suspends transmission of the deletion condition satisfaction notification M42, the vehicle manager 26 transmits the transmission suspension notification M61 to the first device 30A. The first device 30A is the device 30 that is the source of the deletion request for the deletion subject digital key. This allows the user of the first device 30A to recognize that the deletion management by the management system 10 has been suspended even when the deletion condition RC for deleting the deletion subject digital key was satisfied after the user operated the first device 30A to transmit the deletion reservation request D41.

(2-3) When the vehicle manager 26 suspends transmission of the deletion condition satisfaction notification M42 and then use of the authenticated digital key is finished, the vehicle manager 26 cancels the suspension of transmission of the deletion condition satisfaction notification M42. This allows the management system 10 to ensure that the deletion subject digital key is deleted when the deletion condition RC is satisfied after the use of the authenticated digital key is finished.

(2-4) When the vehicle manager 26 cancels the suspension of transmission of the deletion condition satisfaction notification M42, the vehicle manager 26 transmits the suspension cancellation notification M62 to the first device 30A. The first device 30A is the device 30 that is the source of the deletion request for the deletion subject digital key. This allows the user of the first device 30A to recognize that the deletion management has been resumed after the deletion management by the management system 10 was suspended.

(2-5) After the vehicle manager 26 cancels the suspension of transmission of the deletion condition satisfaction notification M42, the vehicle manager 26 again starts to determine whether the deletion condition RC is satisfied. Therefore, when any digital key that is different from both the deletion subject digital key and the digital keys registered based on the deletion subject digital key is authenticated after the use of the authenticated digital key is finished, the vehicle manager 26 transmits the deletion condition satisfaction notification M42 to the management server 70. This allows the management server 70 to delete the deletion subject digital key and the digital keys registered based on the deletion subject digital key without receiving another deletion reservation request D41.

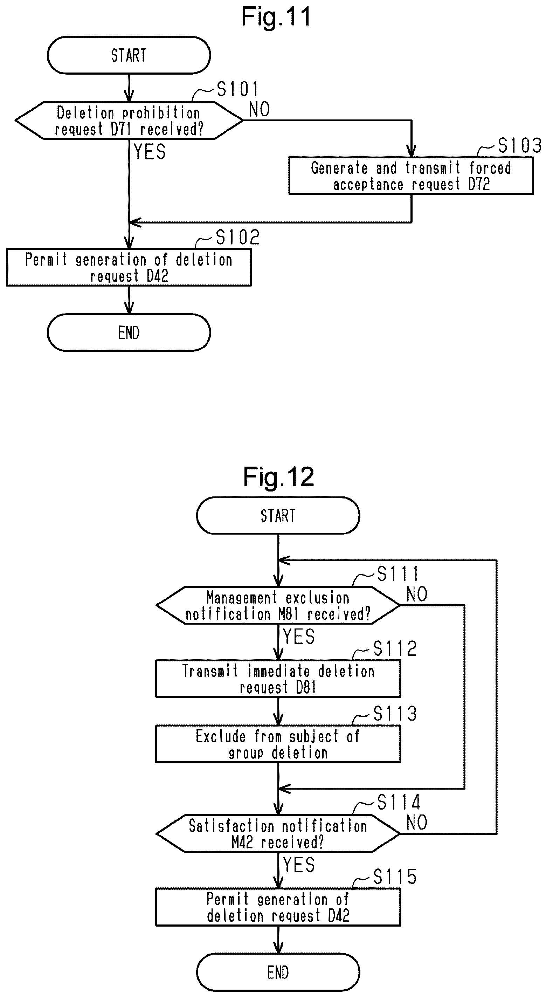

Fig. 11 illustrates a management system 10 in accordance with a third embodiment. The third embodiment mainly differs from the first embodiment in that the management system 10 does not issue an instruction to delete the deletion subject digital key under a condition in which the management server 70 receives a deletion prohibition request D71. The description hereafter will focus on the differences from the first embodiment, and the same aspects will not be described in detail.

In the third embodiment, the deletion-in-progress notification M41 is received by the device 30, to which one of the digital keys registered based on the deletion subject digital key is registered. The device 30 that received the deletion-in-progress notification M41 is configured to transmit the deletion prohibition request D71 to the management server 70 within a predetermined period after receiving the deletion-in-progress notification M41. The deletion prohibition request D71 prohibits the vehicle 20 to accept the deletion acceptance request D42 in the acceptance determination, regardless of whether the vehicle 20 authenticates any of the digital keys registered based on the deletion subject digital key.

As illustrated in Fig. 11, when the server processor 71 receives the deletion condition satisfaction notification M42 after the management server 70 transmitted the deletion-in-progress notification M41, the server processor 71 performs step S101. In step S101, the server processor 71 determines whether the management server 70 has received the deletion prohibition request D71 during a period from when the management server 70 transmitted the deletion-in-progress notification M41 to when the server processor 71 received the deletion condition satisfaction notification M42.

When the management server 70 has received the deletion prohibition request D71 (S101: YES), the server processor 71 proceeds to step S102. In step S102, the server processor 71 permits generation of the deletion acceptance request D42. Accordingly, the server processor 71 transmits the deletion acceptance request D42 to the vehicle 20 in step S65 shown in Fig. 8. Then, the server processor 71 ends this process.

When the vehicle 20 receives only the deletion acceptance request D42 without receiving a forced acceptance request D72, which will be described later, the vehicle manager 26 performs step S81 shown in Fig. 9. When the vehicle manager 26 gives an affirmative determination in step S81, the vehicle manager 26 performs step S83. That is, when the management server 70 receives the deletion prohibition request D71 and the vehicle 20 authenticates any of the digital keys registered based on the deletion subject digital key, the management system 10 does not issue an instruction to delete the deletion subject digital key.

In contrast, as illustrated in Fig. 11, when the management server 70 did not receive the deletion prohibition request D71 (S101: NO), the server processor 71 proceeds to step S103. In step S103, the server processor 71 generates the forced acceptance request D72 and transmits the generated forced acceptance request D72 to the vehicle 20.

The forced acceptance request D72 requests the vehicle 20 to accept the deletion acceptance request D42, regardless of whether the vehicle 20 authenticates any of the digital keys registered based on the deletion subject digital key. Then, the server processor 71 proceeds to step S102. Therefore, when step S102 is performed after step S103, the management server 70 transmits both the forced acceptance request D72 and the deletion acceptance request D42 to the vehicle 20.

When the vehicle 20 receives the deletion acceptance request D42 together with the forced acceptance request D72, the vehicle manager 26 performs step S82 shown in Fig. 9 regardless of the determination result in step S81. In other words, the vehicle manager 26 accepts the deletion acceptance request D42 regardless of whether the vehicle 20 authenticates any of the digital keys registered based on the deletion subject digital key. That is, when the management server 70 does not receive the deletion prohibition request D71, the management system 10 executes the group key deletion process even if one or more of the digital keys registered based on the deletion subject digital key is authenticated.

### Advantages of the Third Embodiment

The management system 10 in accordance with the third embodiment has the following advantages in addition to advantages (1-1) to (1-7) of the first embodiment.

(3-1) When the management server 70 receives the deletion prohibition request D71, the management system 10 does not issue an instruction to delete the deletion subject digital key if the vehicle 20 authenticates any of the digital keys (DK3, DK4) registered based on the deletion subject digital key (DK2). If none of the devices 30 (30C and 30D), to which the digital keys registered based on the deletion subject digital key are registered, transmits the deletion prohibition request D71 to the management server 70, there is a relatively high probability that no specific problem would occur from deleting the digital keys (DK3, DK4) registered to these devices 30 (30C, 30D). Therefore, the management system 10 avoids a situation in which deletion of the digital keys, which may be deleted without causing problems, is unnecessarily delayed by performing the acceptance determination.

Fig. 12 illustrates a management system 10 in accordance with a fourth embodiment. The fourth embodiment differs from the third embodiment in that the device 30 transmits a management exclusion notification M81 to the management server 70, instead of the deletion prohibition request D71. In the fourth embodiment, whether the management server 70 receives the management exclusion notification M81 determines whether a corresponding digital key registered based on the deletion subject digital key is deleted together with the deletion subject digital key when the management system 10 deletes the deletion subject digital key through the deletion management.

In the fourth embodiment, when any of the devices 30 (30C, 30D), to which the digital keys (DK3, DK4) registered based on the deletion subject digital key (DK2) are registered, receive the deletion-in-progress notification M41, the device 30 (30C, 30D) that received the deletion-in-progress notification M41 is configured to transmit the management exclusion notification M81 to the management server 70 within a predetermined period after receiving the deletion-in-progress notification M41. The management exclusion notification M81 indicates that the corresponding digital key is allowed to be excluded from the subjects of the group key deletion process. In other words, the management exclusion notification M81 indicates that the corresponding digital key (DK3, DK4) registered based on the deletion subject digital key (DK2) is permitted to be deleted before the deletion subject digital key is deleted by the group key deletion process. That is, the management exclusion notification M81 is a key deletion permission notification indicating that deletion of the corresponding digital key (DK3, DK4) registered based on the deletion subject digital key (DK2) is permitted.

When the management server 70 receives the management exclusion notification M81, the management server 70 determines whether to set the corresponding digital key (DK3, DK4) registered based on the deletion subject digital key (DK2) as the subject of the deletion management. Whether to set the corresponding digital key as the subject of the deletion management refers to whether the corresponding digital key is one of the digital keys registered based on the deletion subject digital key that are subject to the group key deletion process. Specifically, whether to set the corresponding digital key as the subject of the deletion management refers to whether the key authentication information AT of the corresponding digital key is the subject of the deletion acceptance request D42.

As illustrated in Fig. 12, after the management server 70 transmits the deletion-in-progress notification M41 to the third device 30C and the fourth device 30D in step S62 shown in Fig. 8, the management server 70 performs step S111. In step S111, the server processor 71 determines whether the server processor 71 receives the management exclusion notification M81 from the third device 30C or the fourth device 30D.

When the server processor 71 receives the management exclusion notification M81 (S111: YES), the server processor 71 proceeds to step S112. In step S112, the server processor 71 transmits, to the vehicle 20, an immediate deletion request D81 for the digital key (DK3, DK4) registered to the device 30 (30C, 30D) that transmitted the management exclusion notification M81.

When the management server 70 receives the management exclusion notification M81 from the fourth device 30D in step S111, for example, the server processor 71 transmits the immediate deletion request D81 for the fourth digital key DK4 to the vehicle 20.

The immediate deletion request D81 indicates a request for deletion of the key authentication information AT that authenticates the immediate deletion subject digital key, regardless of whether the vehicle 20 authenticates any of the digital keys registered based on the deletion subject digital key or whether the deletion condition RC is satisfied. After transmitting the immediate deletion request D81, the server processor 71 proceeds to step S113.

In step S113, the server processor 71 excludes the immediate deletion subject digital key from the subjects of the group key deletion process. As a result, in the series of processes for the deletion management illustrated in Fig. 8, the server processor 71 does not delete the immediate deletion subject digital key when deleting the deletion subject digital key.

In an example, when the server processor 71 excludes the fourth digital key DK4 from the subjects of the deletion management in step S113, the server processor 71 deletes only the third digital key DK3 when deleting the second digital key DK2. That is, although the third digital key DK3 is deleted by the group key deletion process, the fourth digital key DK4 is not deleted by the group key deletion process. Then, the server processor 71 proceeds to step S114.

When the server processor 71 does not receive the management exclusion notification M81 (S111: NO), the server processor 71 proceeds to step S114 without performing step S112 or step S113.

In step S114, the server processor 71 determines whether to receive the deletion condition satisfaction notification M42. When the server processor 71 does not receive the deletion condition satisfaction notification M42 (S114: NO), the server processor 71 returns to step S111.

When the server processor 71 receives the deletion condition satisfaction notification M42 (S114: YES), the server processor 71 proceeds to step S115. In step S115, the server processor 71 permits generation of the deletion acceptance request D42. The server processor 71 transmits the deletion acceptance request D42 to the vehicle 20 in step S65 shown in Fig. 8. Then, the server processor 71 ends this process.

When the vehicle 20 receives the immediate deletion request D81, the vehicle manager 26 deletes the key authentication information AT indicating the immediate deletion subject digital key. In particular, the vehicle manager 26 deletes the key authentication information AT indicating the immediate deletion subject digital key, regardless of whether the vehicle 20 authenticates any of the digital keys registered based on the deletion subject digital key or whether the deletion condition RC is satisfied.

In the present embodiment, the management server 70 also generates the deletion execution request D43 for the immediate deletion subject digital key in step S68 shown in Fig. 8. Accordingly, the key authentication information AT that authenticates the immediate deletion subject digital key is deleted first, the acceptance determination is performed next, and then, the key authentication information AT that authenticates the digital keys subject to the deletion management is deleted. Thereafter, the management server 70 simultaneously transmits the deletion execution request D43 to the devices 30.

### Advantages of Fourth Embodiment

The management system 10 in accordance with the fourth embodiment has the following advantages in addition to advantages (1-1) to (1-7) of the first embodiment.

(4-1) When the management server 70 receives the management exclusion notification M81, the management server 70 excludes the corresponding digital key registered to the device 30 that transmitted the management exclusion notification M81 from the subjects of the deletion management. Therefore, the management system 10 deletes the digital key registered to the device 30 that transmitted the management exclusion notification M81, regardless of whether the vehicle 20 authenticates any of the digital keys registered based on the deletion subject digital key. As a result, the management system 10 readily deletes, without waiting for the group key deletion process, the digital key registered to the device 30 that transmitted the management exclusion notification M81, which indicates that deletion of the corresponding digital key is permitted.

(4-2) When the management server 70 receives the management exclusion notification M81, the management server 70 excludes the corresponding digital key registered to the device 30 that transmitted the management exclusion notification M81 from the subjects of the deletion management. The management system 10 deletes the key authentication information AT indicating the immediate deletion subject digital key, regardless of whether the vehicle 20 authenticates any of the digital keys registered based on the deletion subject digital key or whether the deletion condition RC is satisfied. As a result, the management system 10 readily deletes, without waiting for the deletion condition RC to be satisfied, the digital key registered to the device 30 that transmitted the management exclusion notification M81, which indicates that deletion of the corresponding digital key is permitted.

### Fifth Embodiment

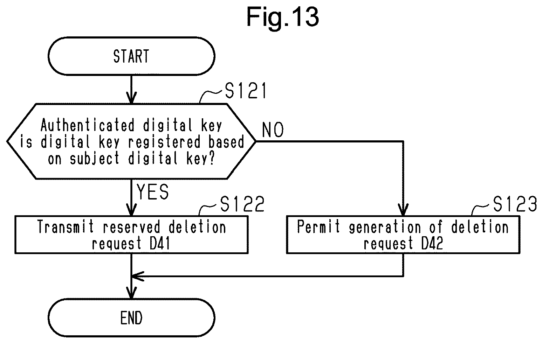

Fig. 13 illustrates a management system 10 in accordance with a fifth embodiment. The fifth embodiment mainly differs from the first embodiment in that the management server 70 performs a generation permission determination of the deletion acceptance request D42, instead of that the vehicle 20 performs the acceptance determination of the deletion acceptance request D42. The description hereafter will focus on the differences from the first embodiment, and the same aspects will not be described in detail.

In the fifth embodiment, when the management server 70 receives the deletion condition satisfaction notification M42 from the vehicle 20 during the deletion management illustrated in Fig. 8, the management server 70 receives information that identifies the authenticated digital key from the vehicle 20.

As illustrated in Fig. 13, when the management server 70 receives the deletion condition satisfaction notification M42 and the identification information of the authenticated digital key, the server processor 71 performs step S121. In step S121, the server processor 71 determines whether the authenticated digital key is registered based on the deletion subject digital key. Specifically, the server processor 71 refers to the database DB to determine whether the authenticated digital key is included in the digital keys registered based on the deletion subject digital key of the deletion reservation request D41.

When the authenticated digital key is included in the digital keys registered based on the deletion subject digital key (S121: YES), the server processor 71 proceeds to step S122. In step S122, the server processor 71 transmits the deletion reservation request D41 to the vehicle 20. Then, the management server 70 ends this process. In this case, the management server 70 does not permit generation of the deletion acceptance request D42 in the determination of whether to permit deletion of the key authentication information AT. As a result, the management system 10 does not execute the group key deletion process of step S67.

When the vehicle 20 receives the deletion reservation request D41, which was transmitted to the vehicle 20 in step S122, the vehicle manager 26 again performs step S63. When the vehicle manager 26 again determines that the deletion condition RC is satisfied, the vehicle manager 26 transmits the deletion condition satisfaction notification M42 and the information that identifies the authenticated digital key to the management server 70.

When the management server 70 receives the deletion condition satisfaction notification M42 and the information that identifies the authenticated digital key, the server processor 71 again performs step S121. In this manner, the management server 70 performs steps S121 and S 122 to again transmit the deletion reservation request D41 without generating the deletion acceptance request D42. This causes the vehicle 20 to repeat steps S63 and S64 shown in Fig. 8.

When the authenticated digital key is not included in the digital keys registered based on the deletion subject digital key (S121: NO), the server processor 71 proceeds to step S123.

In step S123, the server processor 71 permits generation of the deletion acceptance request D42. Then, the server processor 71 ends this process. When the server processor 71 permits generation of the deletion acceptance request D42 in step S123, the server processor 71 performs step S65. Subsequently, the management system 10 continues the process from step S65 to execute the group key deletion process.

### Advantages of Fifth Embodiment

The management system 10 in accordance with the fifth embodiment has the following advantages in addition to advantages (1-1) to (1-2) of the first embodiment.

(5-1) The management server 70 determines whether the authenticated digital key is registered based on the deletion subject digital key. When the management server 70 determines that the authenticated digital key is registered based on the deletion subject digital key, that is, when the vehicle 20 authenticates the digital key registered based on the deletion subject digital key, the management system 10 executes the group key deletion process. In contrast, when the management server 70 determines that the authenticated digital key is not registered based on the deletion subject digital key, the management system 10 does not execute the group key deletion process. That is, when the vehicle 20 does not authenticate the digital key registered based on the deletion subject digital key, the management system 10 does not execute the group key deletion process.

As described above, the management server 70 determines whether to execute the group key deletion process. Accordingly, the vehicle manager 26 may delete the key authentication information AT in accordance with the deletion acceptance request D42. This allows the management system 10 to determine whether to execute the group key deletion process based on when the management server 70 transmits the deletion acceptance request D42.

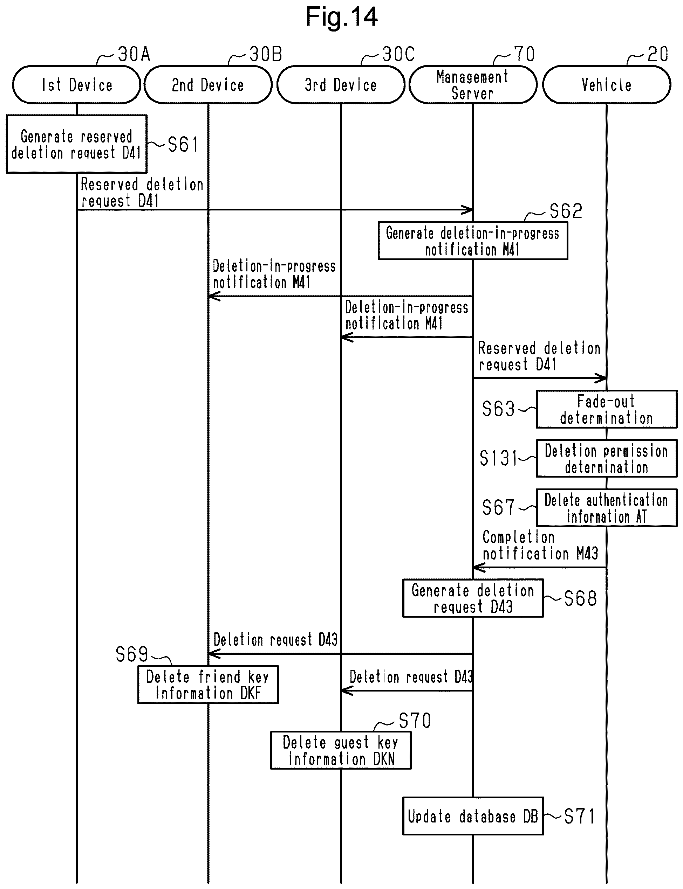

Figs. 14 to 15 illustrate a management system 10 in accordance with a sixth embodiment. The sixth embodiment differs from the first embodiment in that the vehicle 20 does not perform the acceptance determination of the deletion acceptance request D42. The vehicle 20 of the present embodiment mainly differs in that the vehicle 20 determines whether to permit deletion of the key authentication information AT. The description hereafter will focus on the differences from the first embodiment, and the same aspects will not be described in detail.

As illustrated in Fig. 14, the management system 10 performs the deletion management that includes the group key deletion process. In the deletion management, the first device 30A performs step S61 and then transmits the deletion reservation request D41 to the management server 70.

The management server 70 performs step S62 and then transmits the deletion-in-progress notification M41 to the second device 30B and the third device 30C. Subsequently, the management server 70 transmits the deletion reservation request D41 to the vehicle 20. When the management server 70 transmits the deletion reservation request D41 to the vehicle 20, the management server 70 also transmits information that identifies the digital keys subject to the group key deletion process to the vehicle 20.

When the vehicle 20 determines that the deletion condition RC is satisfied in S63, the vehicle 20 proceeds to step S131.

In step S131, the vehicle 20 determines whether to permit deletion of the key authentication information AT. Details of the determination of whether to permit deletion of the key authentication information AT will be described later. When the vehicle 20 permits deletion of the key authentication information AT in step S131, that is, when the vehicle 20 determines to execute the group key deletion process, the vehicle 20 proceeds to step S67. The process after step S67 is the same as that of the first embodiment, and thus will not be described in detail.

### Determination of Whether to Permit Deletion of Authentication Information

The determination of whether to permit deletion of the key authentication information AT performed by the vehicle manager 26 will now be described in detail.

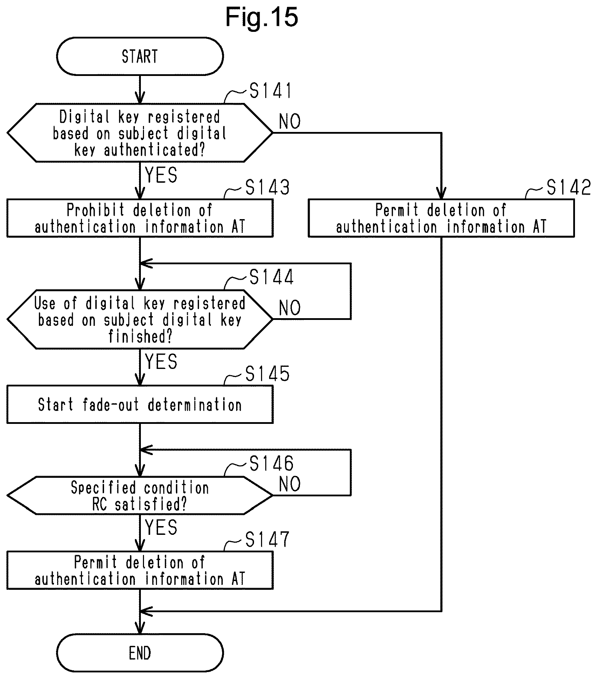

As illustrated in Fig. 15, when the vehicle manager 26 performs the determination of whether to permit deletion of the key authentication information AT, the vehicle processor 27 starts the process from step S141.

In step S141, the vehicle processor 27 determines whether the vehicle 20 authenticates any of the digital keys registered based on the deletion subject digital key. More specifically, the vehicle processor 27 determines whether the vehicle 20 has authenticated any of the digital keys registered based on the deletion subject digital key during a period from when the vehicle 20 received the deletion reservation request D41 to when the deletion condition RC was satisfied.

Specifically, the deletion subject digital key is the second digital key DK2. The digital keys registered based on the deletion subject digital key are the third digital key DK3 and the fourth digital key DK4.

When at least one of the third digital key DK3 and the fourth digital key DK4 is authenticated by the vehicle 20, the vehicle processor 27 gives an affirmative determination in step S141. When neither the third digital key DK3 nor the fourth digital key DK4 is authenticated by the vehicle 20, the vehicle processor 27 gives a negative determination in step S141.

When none of the digital keys registered based on the deletion subject digital key is authenticated by the vehicle 20 (S141: NO), the vehicle processor 27 proceeds to step S142. In step S142, the vehicle processor 27 permits deletion of the key authentication information AT. Then, the vehicle processor 27 ends this determination of whether to permit deletion of the key authentication information AT. Thereafter, the management system 10 executes the group key deletion process by performing step S67 in the series of processes for the deletion management illustrated in Fig. 14.

As illustrated in Fig. 15, when at least one of the digital keys registered based on the deletion subject digital key is authenticated by the vehicle 20 (S141: YES), the vehicle processor 27 proceeds to step S143. In step S143, the vehicle processor 27 prohibits deletion of the key authentication information AT.

When the vehicle processor 27 only performs step S143, the management system 10 does not issue an instruction to delete the key authentication information AT in the series of processes for the deletion management illustrated in Fig. 14. That is, the management system 10 does not execute the group key deletion process. In other words, the vehicle processor 27 does not issue an instruction to delete the key authentication information AT, so that the deletion subject digital key and the digital keys registered based on the deletion subject digital key are not deleted.

After prohibiting deletion of the key authentication information AT, the vehicle processor 27 proceeds to step S144. In step S144, the vehicle processor 27 determines whether use of the authenticated digital key is finished. The use of the authenticated digital key is finished when the authenticated digital key returns to a state unable to control the vehicle 20.

When the vehicle processor 27 determines that the use of the authenticated digital key is not finished (S144: NO), the vehicle processor 27 repeats step S144. When the vehicle processor 27 determines that the use of the authenticated digital key is finished (S144: YES), the vehicle processor 27 proceeds to step S145.

In step S145, the vehicle processor 27 again starts repeating the fade-out determination until the vehicle processor 27 determines that the deletion condition RC is satisfied. Then, the vehicle processor 27 proceeds to step S146.

In step S146, the vehicle processor 27 determines whether the deletion condition RC is satisfied based on the performed fade-out determination. When the deletion condition RC is not satisfied (S146: NO), the vehicle processor 27 repeats step S146.

When the deletion condition RC is satisfied (S146: YES), the vehicle processor 27 proceeds to step S147. In step S147, the vehicle processor 27 permits deletion of the key authentication information AT. Then, the vehicle processor 27 ends the series of processes for this determination of whether to permit deletion of the key authentication information AT.

In the sixth embodiment, the vehicle processor 27, which is a computer, executes the group key deletion process by running the vehicle program PV to perform steps S63, S131, and S67. That is, the vehicle program PV is a program that causes the vehicle processor 27 to execute the group key deletion process.

### Advantages of Sixth Embodiment

The management system 10 in accordance with the sixth embodiment has the following advantages in addition to advantages (1-1) to (1-2) of the first embodiment.

(6-1) The vehicle manager 26 performs the determination of whether to permit deletion of the key authentication information AT after the fade-out determination determines that the deletion condition RC is satisfied. When deletion of the key authentication information AT is permitted, the vehicle manager 26 executes the group key deletion process and deletes the key authentication information AT in step S67. Thus, in the sixth embodiment, after the vehicle 20 receives the deletion reservation request D41, the vehicle manager 26 determines whether to execute the group key deletion process and executes the group key deletion process without communicating with the management server 70. This allows the vehicle manager 26 to independently manage the group key deletion process.

### Modified Examples

The above-described embodiments may be modified as follows. The above embodiments and the following modifications can be combined as long as the combined modifications remain technically consistent with each other.

### Management System

The vehicle 20 does not have to include one or more of the vehicle BLE module 23, the vehicle UWB module 24, and the vehicle NFC module 25. The vehicle 20 can perform short-range communication with the device 30 as long as the vehicle 20 includes at least one of the above modules. There is no limitation to those modules listed above, and the vehicle 20 may include any module that is configured to perform short-range communication with the device 30.

The digital keys may be authenticated by an ECU that is different from the vehicle manager 26 and is installed in the vehicle 20.

The digital key-related aspects of the above embodiments do not have to be compliant with the CCC standard.

The vehicle manager 26 does not have to be a digital key ECU. The vehicle manager 26 may be, for example, a central ECU that manages multiple ECUs of the vehicle 20 in a centralized manner.

The vehicle manager 26 may be (a) circuitry including one or more processors that execute various processes in accordance with computer programs (software), (b) circuitry including one or more dedicated hardware circuits, such as an application specific integrated circuit (ASIC), that execute at least part of various processes, or (c) circuitry including a combination of the above. The processor includes a CPU and memory, such as RAM, ROM, or the like. The memory stores program codes or instructions configured to cause the CPU to execute processes. The memory, which is a non-transitory computer-readable storage medium, may include any type of media that is accessible by a general-purpose computer or a dedicated computer. The same applies to the devices 30 and the management server 70.

The device 30 is not limited to a smartphone. The device 30 may be a smart watch. The device 30 may be a predetermined server. In this case, the predetermined server may include the device 30. For example, when the owner of the vehicle 20 is a rental-car service provider or a car-sharing service provider, the owner device 40 may be included in the predetermined server. Also, the friend device 51 may be included in the predetermined server.

In the above embodiments, the owner key KO, the friend key KF, and the guest key KN are ranked in the hierarchy of priority in this order, and a relatively high degree of authority is granted to a digital key having a relatively high priority level. A relatively high degree of authority does not have to be granted to a digital key having a relatively high priority devel. For example, the same degree of authority may be granted to the owner key KO, the friend key KF, and the guest key KN, having three different priority levels.

As described in the above embodiments, the shareable device 50 has a functionality of receiving a shareable key KS. The device 30 having a functionality of receiving a digital key, such as the shareable device 50, may be referred to as a receiver device.

As long as wireless communication can be performed between multiple devices 30 and the management server 70, a separate device server 60 does not have to be provided for each type of device 30. As long as wireless communication can be performed directly between multiple devices 30 and the management server 70, the device server 60 may be omitted.

The management server 70 may include multiple servers. In an example, the management server 70 may include a server that stores the database DB and a server that executes the server program PS. In another example, the management server 70 may include a server that communicates with the vehicle 20 and a server that communicates with the device server 60. These servers may be configured to communicate with each other.

The management server 70 does not have to store the database DB. The management server 70 may only manage a combination of the key information DK of the device 30 and the key authentication information AT of the vehicle manager 26 for at least one digital key included in the management system 10.

The management system 10 may only execute the group key deletion process. Accordingly, the management system 10 does not have to include the management server 70. The management system 10 may only trigger the group key deletion process, determine whether to execute the group key deletion process, and execute the group key deletion process. In the first embodiment, the management server 70 triggers the group key deletion process, and the vehicle manager 26 determines whether to execute the group key deletion process and executes the group key deletion process. There is no limitation to such a configuration.

In an example, the vehicle manager 26 may trigger the group key deletion process, determine whether to execute the group key deletion process, and execute the group key deletion process. In this case, the management system 10 may be formed by only the vehicle manager 26. In another example, the management system 10 may be formed by the management server 70 and multiple devices 30. In another example, the management system 10 may be formed by the management server 70 and the vehicle manager 26.

When a digital key is deleted, the digital key shifts from an enabled state to a disabled state. In the above embodiments, a digital key is shifted to a disabled state by deleting either corresponding key authentication information AT or corresponding key information DK.

Accordingly, deleting a digital key corresponds to deleting at least one of the key authentication information AT related to the digital key stored in the vehicle manager 26, and the key information DK related to the digital key stored in the device 30. When deleting both the key authentication information AT and the key information DK, the digital key is deleted at a point in time at which either one of the key authentication information AT or the key information DK is deleted first.

### Various Types of Information

The information related to a digital key stored in the vehicle manager 26 is not limited to the key authentication information AT, and may include any information related to the digital key. For example, information related to a digital key may include information that identifies the digital key.

The information related to a digital key stored in the device 30 is not limited to the key information DK, and may include any information related to the digital key. For example, information related to a digital key may include information that identifies the digital key.

As described in the above embodiments, the information related to a digital key stored in the vehicle manager 26 may differ from the information related to the digital key stored in the device 30. Alternatively, the information related to a digital key stored in the vehicle manager 26 may be the same as the information related to the digital key stored in the device 30.

As long as the key authentication information AT authenticates a digital key when the digital key is used, the key authentication information AT is not limited to the examples described in the above embodiments. In an example, the key authentication information AT may be a common key shared by the vehicle manager 26 and the device 30. In another example, the key authentication information AT may be a common private key.

The configuration of information included in the key information DK is not limited to the examples described in the above embodiments. In an example, the owner key information DKO does not have to include the slot identification information ST4. In another example, the key information DK may include information indicating the type of digital key. The information indicating the type of digital key includes, for example, information indicating one of the owner key KO, the friend key KF, and the guest key KN.

The database DB may include information indicating the type of device 30. The information indicating the type of device 30 includes, for example, information indicating any of a smartphone, a smartwatch, a predetermined server described in the above modified example, or the like.

The configuration of the data block DA in the database DB is not limited to the examples described in the above embodiments. The database DB may only store information necessary for the management server 70 of the management system 10 to perform management.

In the database DB, the digital keys of the same type do not have to be granted with the same degree of authority, and the degree of authority may vary between individual digital keys. Alternatively, in the database DB, authority does not have to be granted to any digital key.

### Registration of Digital Key

The series of processes for registering the owner key KO is not limited to examples described in the above embodiments. For example, the owner device 40 does not have to perform the pairing process of step S12, and may store the owner key information DKO through exchange of information, such as the generation data DC, between the vehicle 20 and the first device 30A via the management server 70. The series of processes for registering the owner key KO may be modified in accordance with the configuration of the information included in the owner key information DKO and the configuration of the information included in the key authentication information AT.

The series of processes for registering the friend keys KF is not limited to the examples described in the above embodiments. For example, the management server 70 may update the database DB in step S29 after transmitting the authentication package ATP and the storage request D24 to the vehicle 20. The series of processes for registering the friend key KF may be modified in accordance with the configuration of the information included in the friend key information DKF and the configuration of the information included in the key authentication information AT.

The series of processes for registering the guest key KN is not limited to the examples described in the above embodiments. The sequence of the series of processes for registering the guest key KN may differ from the sequence of the series of processes for registering the friend key KF. The series of processes for registering the guest key KN may be modified in accordance with the configuration of the information included in the guest key information DKN and the configuration of the information included in the key authentication information AT.

The guest key KN does not have to be a type of digital key. That is, the friend key KF may be the only shareable key KS in the management system 10. In this case, the deletion subject digital key may be the owner key KO, and the digital key registered based on the deletion subject digital key may be the friend key KF.

The guest device 52 may be configured to transmit a request for registration of a new guest key KN. In other words, the shareable device 50 may transmit a request for registration of a new guest key KN, regardless of whether the shareable device 50 is the friend device 51 or the guest device 52. In this case, the management system 10 may register a new guest key KN through the series of processes illustrated in Fig. 7.

The deletion subject digital key is not limited to the second digital key DK2, which is the friend key KF. In an example, when a new guest key KN is registered based on the third digital key DK3, as described in the above modified example, the deletion subject digital key may be the third digital key DK3. In another example, the deletion subject digital key may be the owner key KO.

### Deletion Reservation Request

The deletion reservation request D41 may be generated by a device that is not the device 30. The management server 70 or the vehicle 20 may generate the deletion reservation request D41.

The device 30 may be configured to generate the deletion reservation request D41 for a digital key of which registration the device 30 was not involved in. For example, the second device 30B may generate the deletion reservation request D41 for the fifth digital key DK5.

### Fade-Out Determination

The deletion condition RC is not limited to that the vehicle 20 authenticates a digital key that is different from the deletion subject digital key. For example, the deletion condition RC may be that a predetermined period elapses from when the deletion reservation request D41 was received.

### Determination of Whether to Execute Group Key Deletion Process

Whether to execute the group key deletion process is determined by, for example, performing the acceptance determination of the deletion acceptance request D42 (step S66 shown in Fig. 8) in the first embodiment. In the second embodiment, the transmission permission determination of the deletion condition satisfaction notification M42 (steps S91 to S93 shown in Fig. 10) is performed. In the fifth embodiment, the generation permission determination of the deletion acceptance request D42 (steps S101 to S103 shown in Fig. 11) is performed. Whether to execute the group key deletion process may be determined based only on whether the vehicle 20 authenticates at least one digital key registered based on the deletion subject digital key, instead of the above-described determinations. In this case, the management system 10 withholds the group key deletion process by suspending transmission or generation of signals that are prerequisites to the group key deletion process in the deletion management.

### Acceptance Determination of Deletion Request

After the vehicle manager 26 cancels the rejection of the deletion acceptance request D42 in step S86 shown in Fig. 9, the vehicle manager 26 does not have to start the determination of whether the deletion condition RC is satisfied in step S88. For example, in the first embodiment, the owner device 40 may start the series of processes illustrated in Fig. 8 from step S61 by generating the deletion reservation request D41 again.

When the vehicle manager 26 cancels the rejection of the deletion acceptance request D42 in step S86 shown in Fig. 9, the vehicle manager 26 does not have to transmit the rejection cancellation notification M52. That is, in the first embodiment, the vehicle manager 26 may omit step S86 of the acceptance determination of the deletion acceptance request D42.

When the use of the digital key registered based on the deletion subject digital key is finished in step S85 shown in Fig. 9 (S85: YES), the vehicle manager 26 does not have to cancel the rejection of the deletion acceptance request D42. For example, in the first embodiment, the vehicle manager 26 may end the series of processes illustrated in Fig. 9 after step S84. That is, the vehicle manager 26 does not have to execute the group key deletion process in response to this deletion reservation request D41.

When the vehicle manager 26 rejects the deletion acceptance request D42 in step S83 shown in Fig. 9, the vehicle manager 26 does not have to transmit the deletion rejection notification M51. For example, in the first embodiment illustrated in Fig. 9, the vehicle manager 26 may omit step S84 of the acceptance determination of the deletion acceptance request D42.

### Transmission Permission Determination of Deletion Condition Satisfaction Notification

When the vehicle manager 26 cancels the suspension of transmission of the deletion condition satisfaction notification M42, the vehicle manager 26 does not have to start the determination of whether the deletion condition RC is satisfied. For example, in the second embodiment illustrated in Fig. 10, the owner device 40 may start the series of processes illustrated in Fig. 8 from step S61 by generating the deletion reservation request D41 again.

When the vehicle manager 26 cancels the suspension of transmission of the deletion condition satisfaction notification M42, the vehicle manager 26 does not have to transmit the suspension cancellation notification M62. That is, in the second embodiment illustrated in Fig. 10, the vehicle manager 26 may omit step S96 of the transmission permission determination of the deletion condition satisfaction notification M42.

When the use of the digital key registered based on the deletion subject digital key is finished, the vehicle manager 26 does not have to cancel the suspension of transmission of the deletion condition satisfaction notification M42. For example, in the second embodiment illustrated in Fig. 10, the vehicle manager 26 may end the series of processes illustrated in Fig. 10 after step S94. That is, the vehicle manager 26 does not have to execute the group key deletion process in response to this deletion reservation request D41.

When the vehicle manager 26 suspends transmission of the deletion condition satisfaction notification M42, the vehicle manager 26 does not have to transmit the transmission suspension notification M61. For example, in the second embodiment illustrated in Fig. 10, the vehicle manager 26 may omit step S94 of the transmission permission determination of the deletion condition satisfaction notification M42.

### Group Key Deletion Process

In the third embodiment illustrated in Fig. 11, the management system 10 executes the group key deletion process in accordance with a condition related to the deletion prohibition request D71. However, the group key deletion process may be executed in accordance with a different condition. For example, a user may set whether to execute the group key deletion process when registering a digital key based on the deletion subject digital key. In this case, the management system 10 may execute the group key deletion process under a condition in which execution of the group key deletion process has been set.

In the fourth embodiment illustrated in Fig. 12, the management system 10 deletes any digital key excluded from the subjects of the group key deletion process, regardless of whether the vehicle 20 authenticates any digital key registered based on the deletion subject digital key. In this case, the management system 10 may delete any digital key excluded from the subjects of the group key deletion process under a condition in which the deletion condition RC is satisfied.

When the management server 70 receives the management exclusion notification M81, the management server 70 does not have to exclude the immediate deletion subject digital key from the subjects of the group key deletion process. In the fourth embodiment illustrated in Fig. 12, the management system 10 may omit step S113.

In the above embodiments, the management system 10 may delete the key information DK of the deletion subject digital key and the key information DK of the digital keys registered based on the deletion subject digital key in the group key deletion process.

The management system 10 may delete the key authentication information AT of the deletion subject digital key and the key information DK of the digital keys registered based on the deletion subject digital key in the group key deletion process.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management system, comprising:
processing circuitry, wherein
the processing circuitry is configured to delete (S69) a deletion subject digital key (DK2) under a condition in which a predetermined specified condition (RC) is satisfied, the deletion subject digital key (DK2) being one of digital keys to a vehicle (20); and
when deleting (S69) the deletion subject digital key (DK2), the processing circuitry is configured to execute a group key deletion process (S70) that deletes one or more registered digital keys, the one or more registered digital keys (DK3, DK4) being another one or more of the digital keys and registered based on the deletion subject digital key (DK2), the group key deletion process (S70) not being executed (S83) if the vehicle (20) authenticates (S81: YES) at least one of the one or more registered digital keys (DK3, DK4), the group key deletion process (S70) being executed (S82) if the vehicle (20) does not authenticate (S81: NO) any of the one or more registered digital keys (DK3, DK4).

2. The management system according to claim 1, further comprising:
a management server (70) including server processing circuitry (71) configured to manage the digital keys; and
a vehicle manager (26) installed in the vehicle (20), the vehicle manager (26) including vehicle processing circuitry (27) and vehicle memory (28), information related to the digital keys being stored in the vehicle memory (28), wherein
the processing circuitry includes the server processing circuitry (71) and the vehicle processing circuitry (27),
when the specified condition (RC) is satisfied, the server processing circuitry (71) is configured to transmit, to the vehicle, a deletion request (D42) for information related to the one or more registered digital keys (DK3, DK4), subject to the group key deletion process (S70),
if the vehicle (20) does not authenticate (S81: NO) any of the one or more registered digital keys (DK3, DK4), the vehicle processing circuitry (27) is configured to accept (S82) the deletion request (D42) so that the group key deletion process (S70) is executed, and
if the vehicle (20) authenticates (S81: YES) at least one of the one or more registered digital keys (DK3, DK4), the vehicle processing circuitry (27) is configured to reject (S83) the received deletion request (D42) so that the group key deletion process (S70) is not executed until use of the at least one of the one or more registered digital keys (DK3, DK4) is finished (S85: YES).

3. The management system according to claim 2, wherein, when the vehicle processing circuitry (27) rejects (S83) the deletion request (D42), the vehicle processing circuitry (27) is configured to transmit a notification (M51) indicating the rejection (S83) of the deletion request (D42) to a device (30A) that is a source of the deletion request (D42).

4. The management system according to claim 2 or 3, wherein, when the use of the at least one of the one or more registered digital keys (DK3, DK4) is finished (S85: YES), the vehicle processing circuitry (27) is configured to cancel (S86) the rejection (S83) of the deletion request (D42).

5. The management system according to claim 4, wherein, when the vehicle processing circuitry (27) cancels (S86) the rejection (S83) of the deletion request (D42), the vehicle processing circuitry (27) is configured to transmit a notification (M52) indicating the cancellation to a device (30A) that is a source of the deletion request (D42); and/or
wherein, after the vehicle processing circuitry (27) cancels (S86) the rejection (S83) of the deletion request (D42), the vehicle processing circuitry (27) is configured to start a determination (S88) of whether the specified condition (RC) is satisfied.

6. The management system according to claim 1, further comprising:
a management server (70) including server processing circuitry (71) configured to manage the digital keys; and
a vehicle manager (26) installed in the vehicle (20), the vehicle manager (26) including vehicle processing circuitry (27) and vehicle memory (28), information related to the digital keys being stored in the vehicle memory (28), wherein
when the specified condition (RC) is satisfied, the vehicle processing circuitry (27) is configured to transmit a notification indicating that the specified condition (RC) is satisfied to the management server (70),
when the server processing circuitry (71) receives the notification indicating that the specified condition (RC) is satisfied, the server processing circuitry (71) is configured to transmit, to the vehicle (20), a deletion request (D42) for information related to the one or more registered digital keys (DK3, DK4) subject to the group key deletion process (S70) so that the group key deletion process (S70) is executed, and
when the vehicle (20) authenticates (S91: YES) at least one of the one or more registered digital keys (DK3, DK4), the vehicle processing circuitry (27) is configured to suspend (S93) transmission of the notification (M42) indicating that the specified condition (RC) is satisfied to the management server (70) so that the group key deletion process (S70) is not executed until use of the at least one of the one or more registered digital keys (DK3, DK4) is finished (S95: YES), the at least one of the one or more registered digital keys (DK3, DK4) being registered in response to a registration request from a device to which the deletion subject digital key (DK2) is registered.

7. The management system according to claim 6, wherein, when the vehicle processing circuitry (27) suspends (S93) transmission of the notification (M42) indicating that the specified condition (RC) is satisfied, the vehicle processing circuitry (27) is configured to transmit (S94) a notification (M61) indicating the transmission suspension (S93) to a device (30A) that is a source of the deletion request (D42).

8. The management system according to claim 6 or 7, wherein, when the use of the at least one of the one or more registered digital keys (DK3, DK4) is finished (S95: YES), the vehicle processing circuitry (27) is configured to cancel (S96) the transmission suspension (S93).

9. The management system according to claim 8, wherein, when the vehicle processing circuitry (27) cancels (S96) the transmission suspension, the vehicle processing circuitry (27) is configured to transmit (S96) a notification (M62) indicating the cancellation of the transmission suspension to a device (30A) that is a source of the deletion request (D42); and/or
wherein, when the vehicle processing circuitry (27) cancels (S96) the transmission suspension (S93), the vehicle processing circuitry (27) is configured to start (S98) a determination of whether the specified condition (RC) is satisfied.

10. The management system according to any one of claims 1 to 9, further comprising:
a management server (70) including server processing circuitry (71) configured to manage the digital keys,
wherein, when the server processing circuitry (71) receives, from a device (30D) to which a corresponding one of the one or more registered digital keys (DK4) is registered, a key deletion permission notification (M81) indicating that deletion of the corresponding one of the one or more registered digital keys (DK4) is permitted, the server processing circuitry (71) is configured to exclude (S113) the corresponding one of the one or more registered digital keys (DK4) from the one or more registered digital keys (DK4) that are subject to the key group key deletion process, the corresponding one of the one or more registered digital keys (DK4) being registered to the device (30D) that transmitted the key deletion permission notification (M81).

11. The management system according to claim 10, wherein the corresponding one of the one or more registered digital keys (DK4) excluded (S113) from the one or more registered digital keys (DK4) that are subject to the group key deletion process is deleted regardless of whether the vehicle (20) authenticates at least one of the one or more registered digital keys (DK3, DK4) or whether the specified condition is satisfied.

12. The management system according to any one of claims 1 to 11, further comprising:
a management server (70) including server processing circuitry (71) configured to manage the digital keys,
wherein, when the vehicle (20) authenticates at least one of the one or more registered digital keys (DK3, DK4) registered in response to a registration request from the deletion subject digital key (DK2), the server processing circuitry (71) is configured to not execute the group key deletion process (S70) under a condition in which the server processing circuitry (71) receives, from at least one of one or more devices (30C, 30D) to which the one or more registered digital keys (DK3, DK4) are respectively registered (S101: YES), a deletion prohibition request (D71) that prohibits deletion of the deletion subject digital key (DK2).

13. A vehicle manager (26), comprising:
vehicle processing circuitry (27) installed in a vehicle (20), wherein
the vehicle processing circuitry (27) is configured to delete (S69) a deletion subject digital key (DK2) under a condition in which a predetermined specified condition (RC) is satisfied, the deletion subject digital key (DK2) being one of digital keys enabled for the vehicle (20), and
when deleting (S69) the deletion subject digital key (DK2), the vehicle processing circuitry (27) is configured to execute a group key deletion process (S70) that deletes one or more registered digital keys, the one or more registered digital keys (DK3, DK4) being another one or more of the digital keys and registered based on the deletion subject digital key (DK2), the group key deletion process (S70) not being executed if the vehicle (20) authenticates (S81: YES) at least one of the one or more registered digital keys (DK3, DK4), the group key deletion process (S70) being executed (S82) if the vehicle (20) does not authenticate (S81: NO) any of the one or more registered digital keys (DK3, DK4).

14. A deletion management method performed by a management system including a computer, the method comprising:
deleting (S69) a deletion subject digital key (DK2) under a condition in which a predetermined specified condition (RC) is satisfied, the deletion subject digital key (DK2) being one of digital keys to a vehicle (20); and
when the deleting (S69) the deletion subject digital key (DK2) is performed, executing a group key deletion process (S70) that deletes one or more registered digital keys, the one or more registered digital keys (DK3, DK4) being another one or more of the digital keys and registered based on the deletion subject digital key (DK2), the group key deletion process (S70) not being executed if the vehicle (20) authenticates (S81: YES) at least one of the one or more registered digital keys (DK3, DK4), the group key deletion process (S70) being executed if the vehicle (20) does not authenticate (S81: NO) any of the one or more registered digital keys (DK3, DK4).

15. A program implemented by a non-transitory computer readable storage medium storing a program code that causes processing circuitry to execute a deletion management process including the deletion management method according to claim 14.
